Europäisches Patentamt

European Patent Office

Office européen des brevets

(11) Publication number: **0 535 639 A2**

# EUROPEAN PATENT APPLICATION

(21) Application number: **92116739.1**

(22) Date of filing: **30.09.92**

(51) Int. Cl.5: **G06F 15/00**

(30) Priority: **30.09.91 JP 252118/91**

(43) Date of publication of application:
**07.04.93 Bulletin 93/14**

(84) Designated Contracting States:
**DE**

(71) Applicant: **MITSUBISHI DENKI KABUSHIKI KAISHA**
**2-3, Marunouchi 2-chome Chiyoda-ku**
**Tokyo 100(JP)**

(72) Inventor: **Seki, Itsuo, c/o MITSUBISHI DENKI K.K.**
**Nagoya Works, 1-14, Yadaminami 5-chome**
**Higashi-ku, Nagoya-shi, Aichi(JP)**

(74) Representative: **Lehn, Werner, Dipl.-Ing. et al**
**Hoffmann, Eitle & Partner Patentanwälte**
**Arabellastrasse 4**
**W-8000 München 81 (DE)**

(54) **Method and apparatus for image processing.**

(57) An image processing apparatus and method for providing arithmetic processing, including the determination of maximum, minimum, median and average values, of an object image with a minimal number of components by multi-stage processing of the object image. The N × M array of picture elements in an image array are read into a first stage on a pipeline basis and are subject to delay on a per-line basis and latching for adjacent processing of image pieces comprising A × B picture elements. The resultant M/A × N/B values from the first stage processing are subject to arithmetic processing in a second stage by further delay, latching and adjacent processing.

Fig.1

## BACKGROUND OF THE INVENTION

### 1. Field of the Invention

The present invention relates to an image processor for use in an image processing field and particularly to the adjacent processing of image data.

### 2. Description of the Background Art

Image detection, storage and processing has significant application to factory automation, such as the automatic detection and registering of the number of parts that have been collected for an assembly process, the number of parts that have been mounted at a particular location of a product or the positioning of a robot on the basis of detected structures. The accuracy of image processing in the factory automation environment depends directly on the ability to have noise (i.e., sources of distortion for recognizable shapes) eliminated from detected images, to have image information efficiently stored and to have image information accurately transmitted for further processing and decision making. On one hand, noise may be generated by waveform distortion and may be effective to create artifacts that can be misinterpreted as the presence of components or workpiece features. On the other hand, variations in the angle of lighting may be effective to change the detected workpiece image and cause the image to be misinterpreted as noise.

In order to eliminate the effect of noise-based errors in the important local areas of entire detected images, whether such errors appear as bright spots, dark spots, lines, image expansions, image reductions, and the like, various local area processing techniques are used. In the "Image Processing Handbook" by Morio Ogami, Shoko-do (19__), particularly at pages 244-246 and 269-272, techniques for deriving the maximum, minimum, median and mean values of image elements in a local image area portion of an entire image in order to eliminate the effects of noise are described.

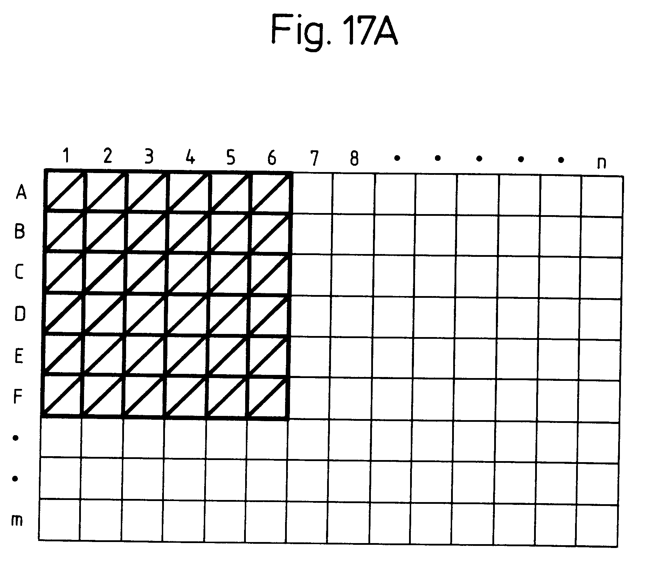

Fig. 17A illustrates an example of an entire image comprising a rectangular arrangement of image elements in an m by n array. Conventionally, the array comprises a sequence of lines (1 to m), each line comprising an identical number of image elements or pixels (1 to n). The entire image may be generated or read out of a memory as picture element data representing each of a sequence of image elements on the basis of the line-by-line assembly of the array. That is, all of the elements of line A must be read out before the elements of line B are accessed, and so on for the remaining lines of the array. However, often, only a portion of the entire image is of interest for factory automation decision making, as indicated by the hatched block comprising locally adjacent image elements 1-6 of each of lines A-F. Certain structures are known for local processing the information in such limited portion of a detected image.

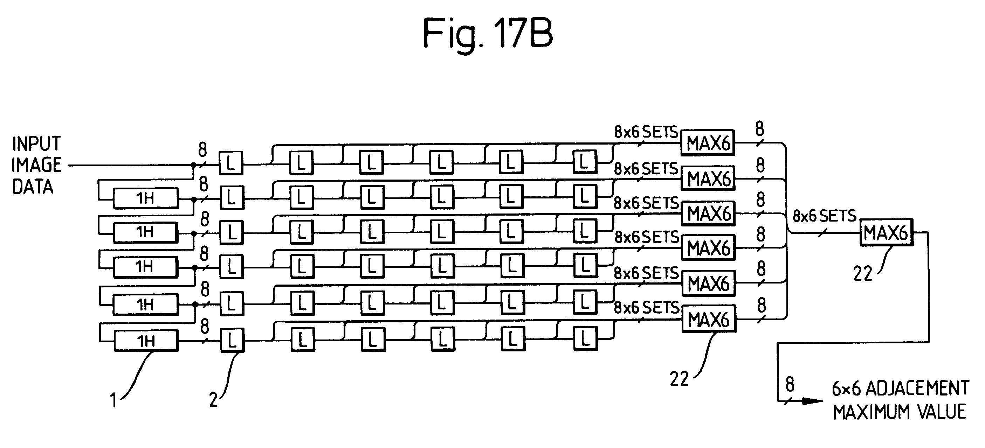

Fig. 17B shows the arrangement of a local image processor known in the art and designed to find the maximum value of six-by-six locally adjacent picture element data over an entire image. In Fig. 17B, the numeral 1 indicates a delay device for picture elements on a single line, 2 a latch device for holding and delaying the eight-bit data of a single picture element, and 22 a means for calculating the picture element maximum value from six sets of eight-bit picture element data.

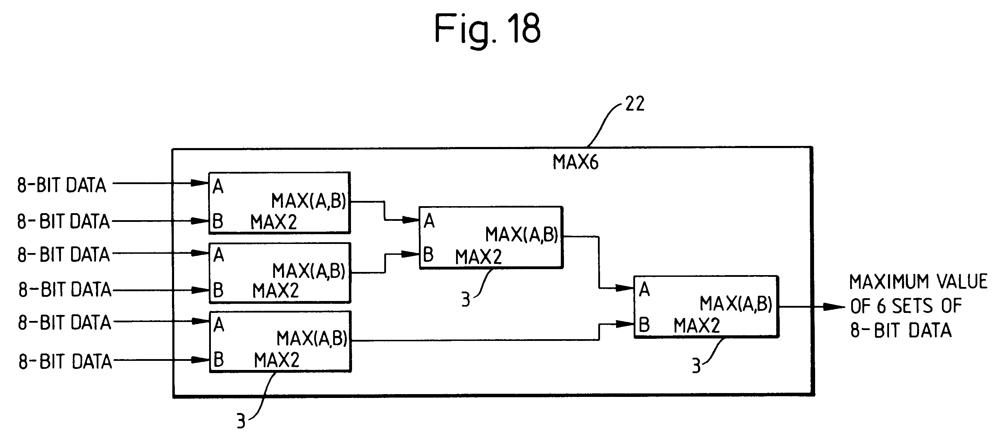

Fig. 18 shows the logic arrangement for calculating the maximum value of six sets of eight-bit picture element data, wherein the numeral 3 indicates the logic element for calculating the maximum value of two sets of eight-bit picture element data, and 22 the logic component for calculating the maximum value of six sets of eight-bit picture element data.

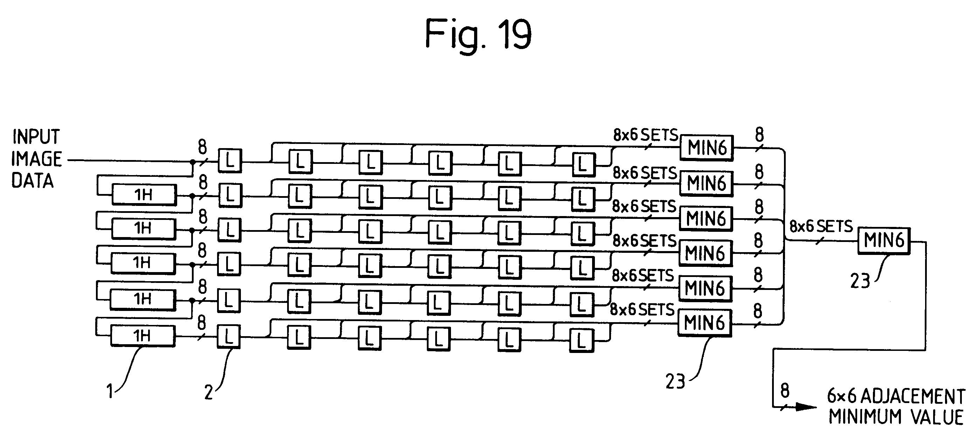

Fig. 19 shows the arrangement of an image processor that is known in the art and is designed to find the minimum value of six-by-six locally adjacent picture element data over an entire image, wherein the numeral 1 indicates a delay device for single-line picture elements, 2 a latch device for retaining and delaying the eight-bit data of a single picture element, and 23 a logic component for calculating the minimum value of six sets of eight-bit picture element data.

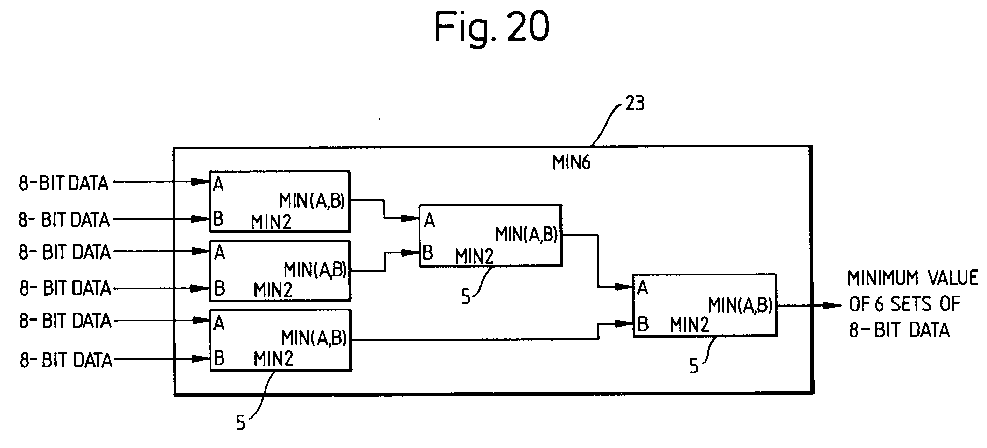

Fig. 20 shows the logic arrangement for calculating the minimum value of six sets of eight-bit picture element data, wherein the numeral 5 indicates a logic element for calculating the minimum value of two sets of eight-bit picture element data, and 23 is a logic component for calculating the minimum value of six sets of eight-bit picture element data.

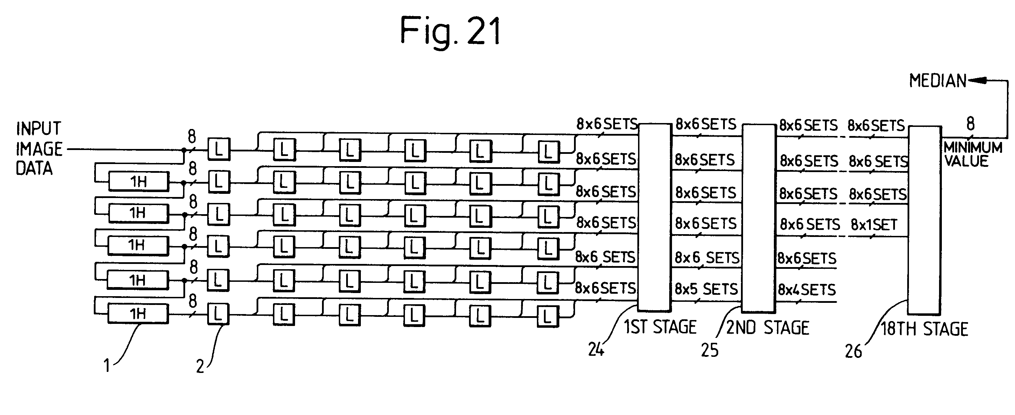

Fig. 21 shows the conventional arrangement for finding the median of six-by-six locally adjacent picture element data over an entire image, wherein the numeral 1 indicates a delay device for single-line picture elements, 2 a latch device for holding and delaying the eight-bit data of a single picture element, 24 a first stage logic device for deleting one minimum value picture element data from 36 sets of eight-bit picture element data and outputting 35 sets of eight-bit picture element data, 25 a second stage logic device for deleting one minimum value picture element data from 35 sets of eight-bit picture element data and

2

outputting 34 sets of eight-bit picture element data, and 26 an 18th stage logic device for calculating the minimum value picture element data in 19 sets of eight-bit picture element data. The output of device 26 is the median value for an array of 36 image elements.

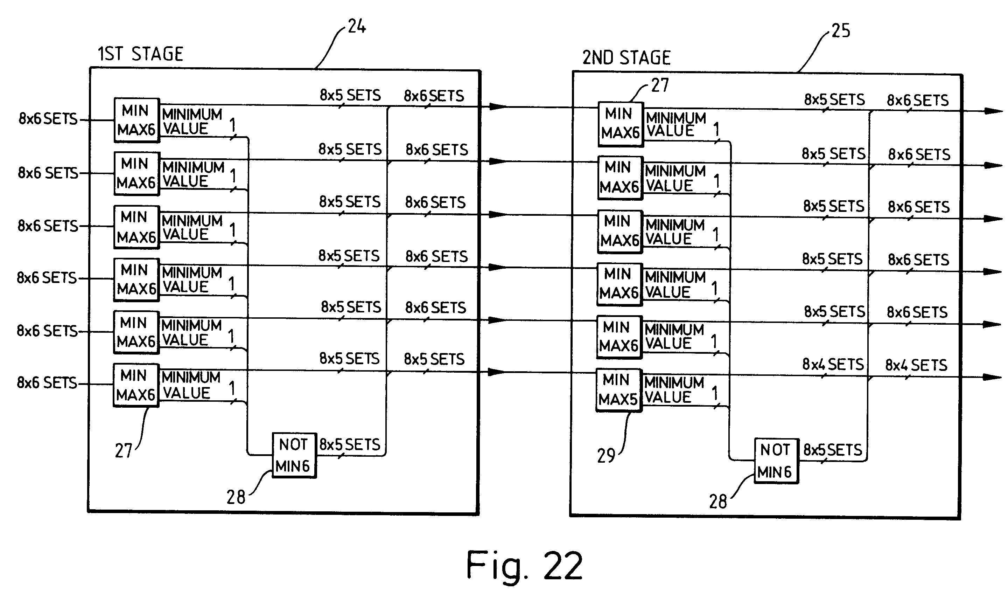

Fig. 22 shows the internal arrangement of the logic device 24 for deleting the minimum value picture element data from 36 sets of eight-bit picture element data and outputting 35 sets of eight-bit picture element data, and the logic device 25 for deleting the minimum value from 35 sets of eight-bit picture element data and outputting 34 sets of eight-bit picture element data. In the Figure, the numeral 27 indicates a logic component for outputting one eight-bit minimum value and five sets of eight-bit picture element data, other than the minimum value, from the six sets of eight-bit picture element data. Logic component 28 is for deleting an eight-bit minimum value from six sets of eight-bit picture element data and outputting five sets of eight-bit picture element data. Logic component 29 is for outputting a minimum value and four sets of eight-bit picture element data other than the minimum value from five sets of eight-bit picture element data.

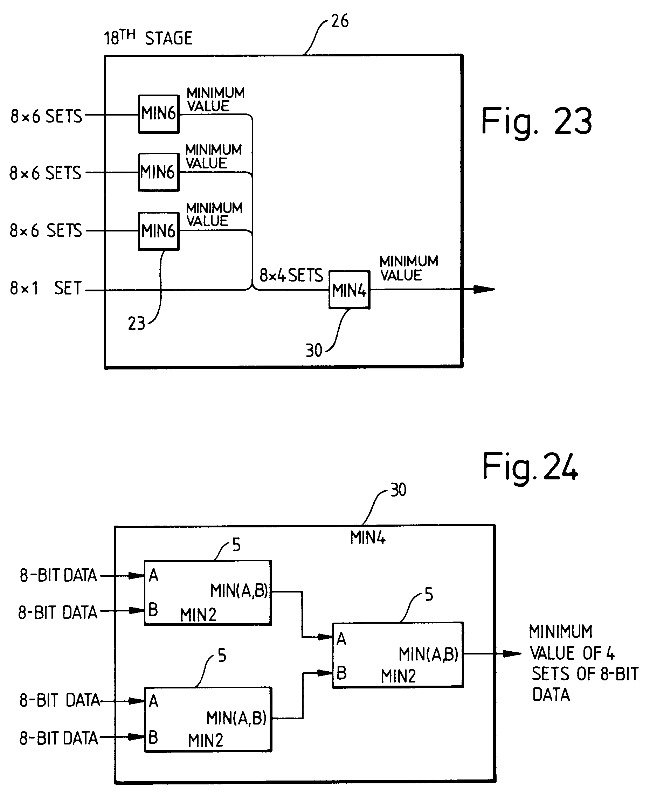

Fig. 23 shows the internal arrangement of the logic device 26 for calculating the minimum value of 19 sets of eight-bit picture element data, wherein the numeral 23 indicates a logic component for calculating the minimum value of six sets of eight-bit picture element data, and 30 numeral indicates a logic component for calculating the minimum value of four sets of eight-bit picture element data.

Fig. 24 shows the internal arrangement of the logic component 30 for calculating the minimum value of four sets of eight-bit picture element data, wherein the numeral 5 indicates a logic element for calculating the minimum value of two sets of eight-bit picture element data.

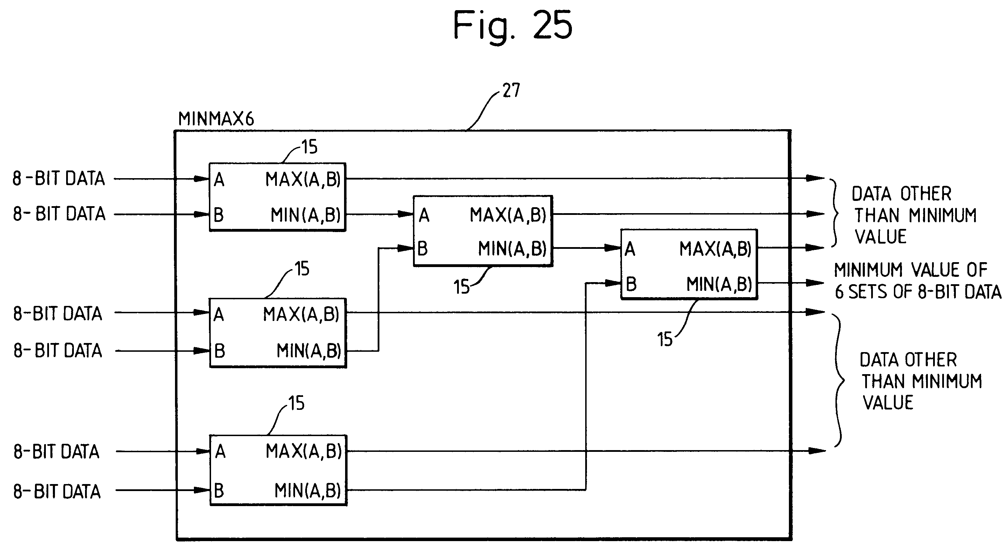

Fig. 25 shows the internal arrangement of the logic component 27 for outputting a minimum value and five sets of eight-bit picture element data other than the minimum value from six sets of eight-bit picture element data, wherein the numeral 15 indicates a logic element for calculating the maximum value and minimum value of two sets of eight-bit picture element data.

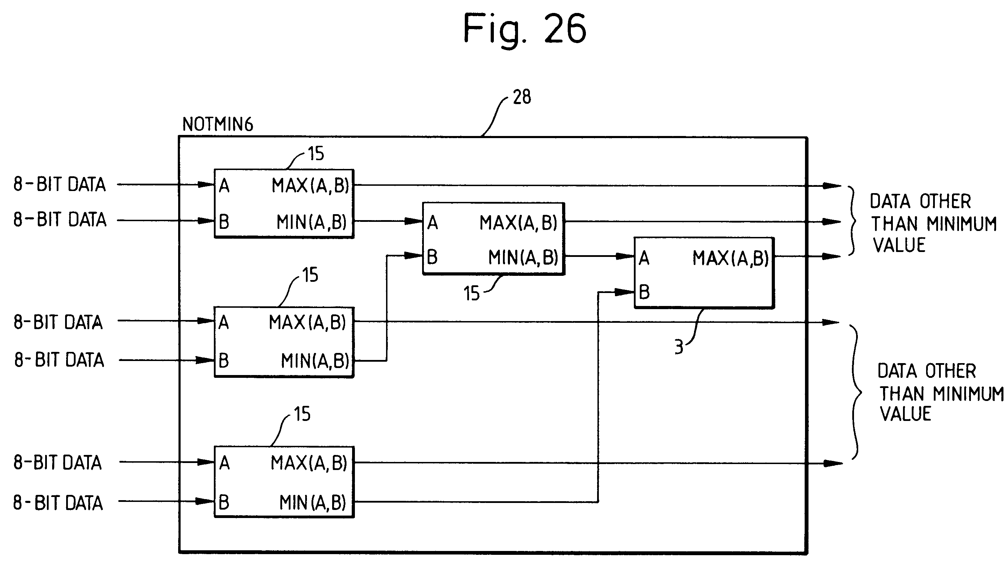

Fig. 26 shows the internal arrangement of the logic component 28 for deleting a minimum value from six sets of eight-bit picture element data and outputting five sets of eight-bit picture element data, wherein the numeral 15 indicates a logic element for calculating the maximum value and minimum value of two sets of eight-bit picture element data, and 3 means for calculating the maximum value of two sets of eight-bit picture element data.

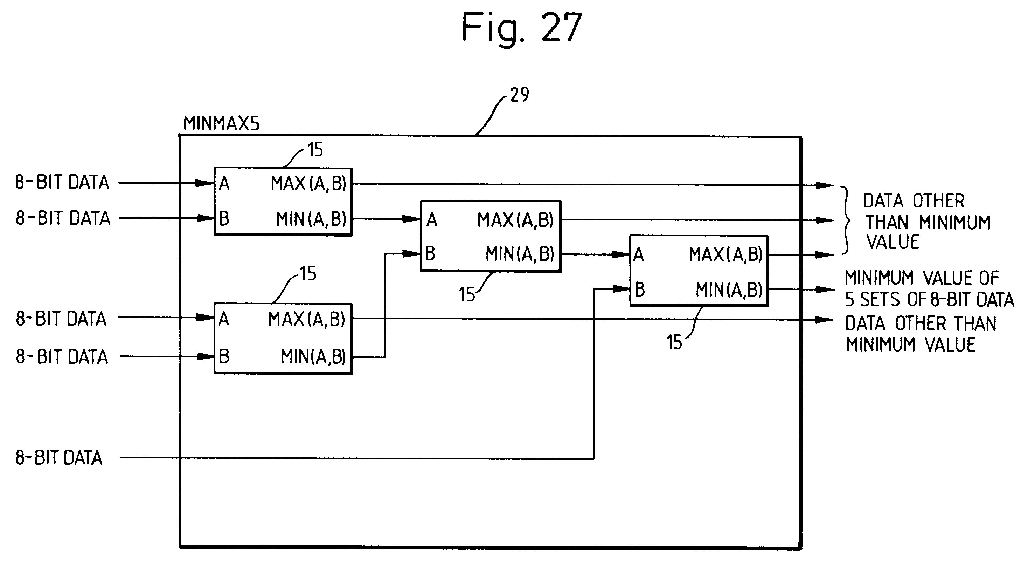

Fig. 27 shows the internal arrangement of the logic component 29 for outputting a minimum value and four sets of eight-bit picture element data other than the minimum value from five sets of eight-bit picture element data, wherein the numeral 15 indicates a logic element for calculating the maximum value and minimum value of two sets of eight-bit picture element data.

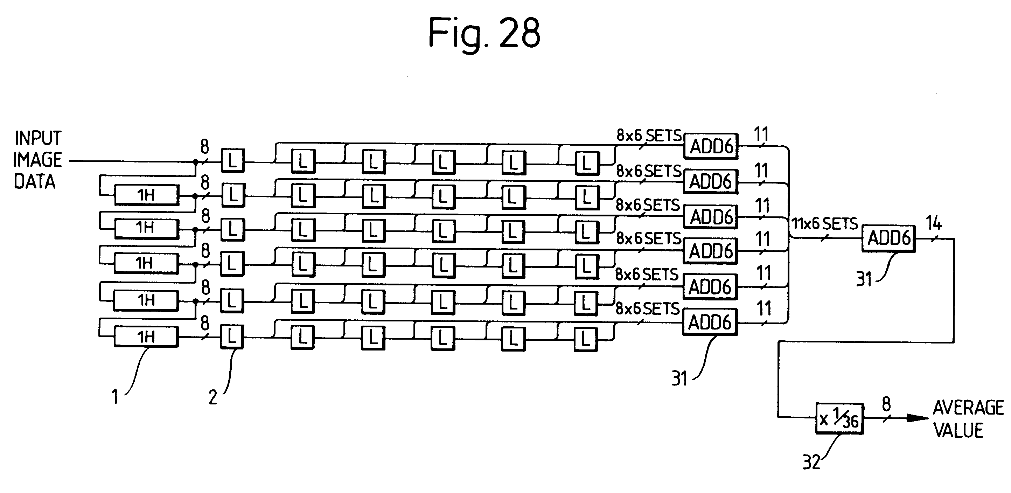

Fig. 28 shows the conventional logic arrangement for calculating an average value. The arrangement is designed to obtain an average value by dividing the sum of six-by-six locally adjacent picture element data by 36, i.e., an average value, over an entire image. In the Figure, the numeral 1 indicates a delay device for picture elements on a single line, 2 a latch device for holding and delaying the eight-bit data of a single picture element, 31 a logic device for finding the sum of six sets of eight-bit and 11-bit picture element data, and 32 a logic device for dividing 14-bit picture element data by 36.

The operation of the conventional image processor will now be described. Referring to Figs. 17A and 17B, the successive lines A, B, C...F of n pixels, each pixel being represented by eight-bit input image data, are entered successively into five single-line picture element delay devices 1. In the illustrated arrangement, all of line A is delayed five times, line B delayed four times, etc., and line F is not delayed, thereby providing for the simultaneous presence of all of the like positioned pixels 1-6 for all of lines A-F. With this structure, six vertically distributed groups of eight-bit picture element data, five being delayed, are provided at the same time.

Each of the six groups of eight-bit picture element data are then entered into six latch devices 2 on a line basis. As a result six groups of eight-bit picture element data, five being delayed, are provided for picture elements 1 to 6 in a horizontal direction. Significantly, this conventional approach requires that all locally adjacent picture elements in a local image area of interest must be input to a single stage of components for full processing.

Accordingly, in the illustrated example, a total of 36 (6 × 6) pieces of eight-bit picture element data are provided, i.e., six lines in the vertical direction and six picture elements in the horizontal direction, thereby generating the so-called "six-by-six" locally adjacent eight-bit picture element data.

The six-by-six locally adjacent eight-bit picture element data is grouped into six sets of eight-bit picture element data per line and a total of six maximum values are calculated by the logic device 22 for calculating the maximum value of six sets of eight-bit picture element data.

Then, the six maximum values calculated by the logic component 22 are further entered into the next logic component 22 for calculating the maximum value of six sets of eight-bit picture element data. The identified maximum value is the one maximum value in the 36 pieces of six-by-six adjacent eight-bit picture element data.

Fig. 18 shows the internal arrangement of the logic component 22 for calculating the maximum value of six sets of eight-bit picture element data, comprising five logic element 3 for calculating the maximum value of two sets of eight-bit picture element data (hereinafter referred to as the "MAX2").

Assuming that the MAX2 is a basic unit, the number of MAX2's required to find the maximum value of six-by-six adjacent picture element data is:

MAX2 = 5 × 7 = 35 pcs.

Also, the numbers of delay and latch devices required to generate the six-by-six adjacent eight-bit picture element data are:

Single-line picture element delay device (hereinafter referred to as the "1H") = 5 pcs. Latch device (hereinafter referred to as the "L") = 36 pcs.

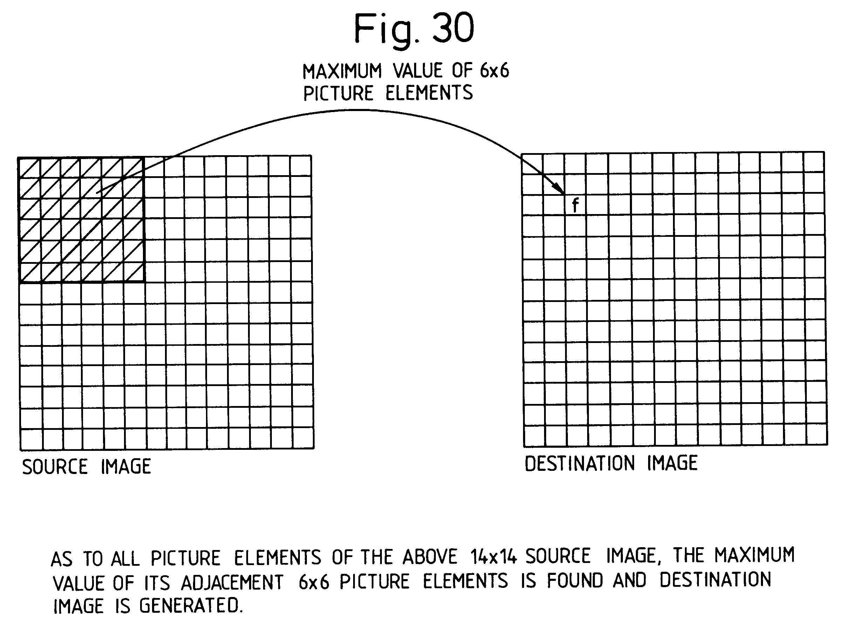

Fig. 30 shows the concept of calculating the maximum value of six-by-six adjacent picture element data for all picture elements of a 14-by-14 source image and generating a destination image. The maximum value of six-by-six adjacent picture element data, represented by the hatched area of the source image, corresponds to a picture element indicated by f in the destination image. Six-by-six adjacent processing moves picture elements one by one from left to right and from top to bottom of the source image and calculates the maximum values over the whole source image.

Accordingly, eight-bit input image data is entered successively on a pipeline basis and its six-by-six adjacent picture element data's maximum values are also output successively on a pipeline basis.

Minimum values, medians and average values described below as well as the maximum values of the locally adjacent picture element data of the image are very useful in preprocessing of image processing.

For instance, the maximum and minimum values correspond to the expansion and contraction of an image and are utilized to eliminate unnecessary noise and remove uneven lighting. Such processes, called morphology processing, especially employ adjacent values and large values, such as six by six or nine by nine. Applications of such morphology processing are described in "Image Labo", vol. 1, no. 11 by Toshiyuki Yamada, Nihon Kogyo Shuppan (19    ), particularly at pages 59 and 60.

The medians are utilized for a noise elimination filter for maintaining the edge of an image. Such processes also employing adjacent values and large values, such as three by three, six by six or nine by nine.

The average values are utilized for elimination of image noise and binary conversion. Average values are particularly useful for so-called variable conversion into binary, a conversion process that depends on whether an outstanding picture element is greater or smaller than the average value of adjacent picture element data whose values are higher than actual.

The minimum values, medians and average values of six-by-six locally adjacent picture element data in the background art will now be described.

Fig. 19 shows the arrangement of a minimum value calculating device for finding the minimum value of six-by-six locally adjacent picture element data over an entire image. In the Figure, the logic component 22 for calculating the maximum value of six sets of eight-bit picture element data in Fig. 17B for maximum value calculation is replaced by the logic component 23 for calculating the minimum value of six sets of eight-bit picture element data.

The internal arrangement of the logic component 23 for calculating the minimum value of six sets of eight-bit picture element data is shown in Fig. 20. The arrangement comprises five logic elements for calculating the minimum value of two sets of 10 eight-bit picture element data (hereinafter referred to as the "MIN2"), in a manner similar to that in Fig. 18.

Assuming, as in Fig. 18, that the MIN2 is a basic unit, the number of MIN2's required to find the minimum value of six-by-six locally adjacent picture element data is:

MIN2 = 5 × 7 = 35 pcs.

The numbers of delay and latch devices are:

1H = 5 pcs.

L = 36 pcs.

Fig. 30 also applies to the calculation of a minimum value, in the same manner that it applies to the maximum value.

Fig. 21 shows the arrangement of median calculating device designed to find the median of six-by-six locally adjacent picture element data over a whole image. This arrangement is fundamentally similar to the maximum value calculating arrangement in Fig. 17 and the minimum value calculating arrangement in Fig. 19, but is different in the logic components used for finding the median.

Thirty-six sets of eight-bit picture element data are first reduced to 35 sets of eight-bit picture element data by the logic device 24 for deleting the minimum value from the 36 sets of eight-bit picture element data and outputting the 35 sets of eight-bit picture element data other than the minimum value (first stage).

The 35 sets of eight-bit picture element data are then reduced to 34 sets of eight-bit picture element data by the logic device 25 for deleting the minimum value from the 35 sets of eight-bit picture element data and outputting the 34 sets of eight-bit picture element data other than the minimum value (second stage).

Similarly, by deleting the lower 17 sets of eight-bit picture element data from the 36 sets of eight-bit picture element data in sequence and calculating the minimum value of the remaining 19 sets of eight-bit picture element data (18th stage), the 18th smallest set among the 36 sets of eight-bit picture element data, i.e., a median, can be calculated.

Fig. 22 shows the internal arrangement of the logic device 24 for deleting minimum value data from 36 sets of eight-bit picture element data and outputting 35 sets of eight-bit picture element data (hereinafter referred to as the "first stage") and the logic device 25 for deleting minimum value data from 35 sets of eight-bit picture element data and outputting 34 sets of eight-bit picture element data (hereinafter referred to as the "second stage").

The 36 sets of eight-bit picture element data are entered six sets by six sets into the logic component 27 for outputting a minimum value and five sets of eight-bit picture element data other than the minimum value from six sets of eight-bit picture element data (hereinafter referred to as the "MINMAX6), which then calculates six sets of minimum value data. The remaining 30 sets of eight-bit picture element data are output intact and entered into the next stage.

The six sets of minimum value data are entered into the logic component 28 for deleting a minimum value from six sets of eight-bit picture element data and outputting five sets of eight-bit picture element data (hereinafter referred to as the "NOTMIN6"). In logic component 28, one set of minimum value data, i.e., the minimum value data of the 36 sets of eight-bit picture element data, is deleted and a total of 35 sets of picture element data, consisting of the 30 sets of eight-bit picture element data and the remaining five sets of eight-bit picture element data, are entered into the next stage.

The next stage, i.e., the second stage, operates similarly. The only difference is that one MINMAX6 is replaced by the logic component 29 for outputting a minimum value and four sets of eight-bit picture element data other than the minimum value from five sets of eight-bit picture element data (hereinafter referred to as the "MINMAX5"). And outputs 34 sets of eight-bit picture element data.

In a similar manner, 33 sets of eight-bit picture element data are output in a third stage, 32 sets of eight-bit picture element data are output in a fourth stage, and this process is repeated until 19 sets of eight-bit picture element data are output in a 17th stage.

In an 18th stage, the minimum value of the 19 sets of eight-bit picture element data is calculated, which is the median to be found. The internal arrangement of the 18th stage is shown in Fig. 23, comprising three logic components 23 for calculating the minimum value of six sets of eight-bit picture element data (hereinafter referred to as the "MIN6") and one logic component 30 for calculating the minimum value of four sets of eight-bit picture element data (hereinafter referred to as the "MIN4"). The MIN6 further comprises five MIN2's as shown in Fig. 20, and the MIN4 comprises three MIN2's as shown in Fig. 24. Hence, the 18th stage comprises:

$5 \times 3 + 3 \times 1 = 18$ MIN2's

The MINMAX6 is arranged as shown in Fig. 25, comprising five logic elements for finding the maximum value and minimum value of two sets of eight-bit picture element data (hereinafter referred to as the "MINMAX2"), and the MIXMAX2 comprises one MIN2 and one MAX2.

The NOTMIN6 is arranged as shown in Fig. 26, comprising four MINMAX2's and one MAX2, and the MINMAX5 comprises four MINMAX2's.

In general, the MINMAXi and NOTMINi (i = integer) comprise:

$$\text{MINMAXi} = (i - 1) \text{ pcs. of MINMAX2's}$$

$$= (i - 1) \text{ pcs. of MIN2's and}$$

$$(i - 1) \text{ pcs. of MAX2's}$$

$$\text{NOTMINi} = (i - 2) \text{ pcs. of MINMAX2's}$$

$$\text{one pc. of MAX2}$$

$$= (i - 2) \text{ pcs. of MIN2's and}$$

$$(i - 1) \text{ pcs. of MAX2's}$$

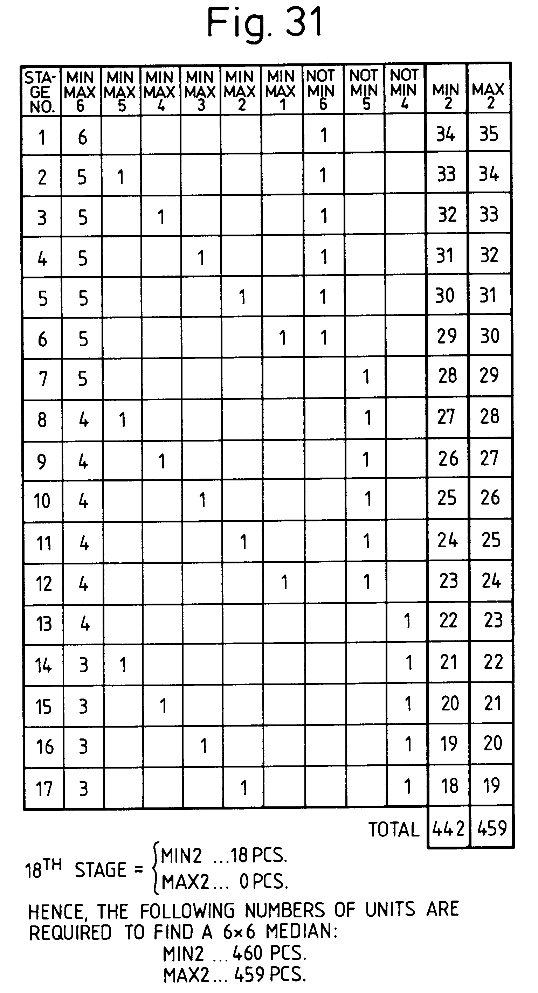

The listing of the number of units constituting the first stage through 17th stage is shown in Fig. 31. According to Fig. 31, the numbers of MIN2's and MAX2's required for the first to 17th stages are:

MIN2 ... 442 pcs.
MAX2 ... 459 pcs.

Since 18 MIN2's are required for the 18th stage, a total of:

MIN2 ... 442 + 18 = 460 pcs.
MAX2 ... 459 pcs.

are required.

Fig. 28 is a block diagram of the average value calculating arrangement for finding the average value of 16 six-by-six locally adjacent picture element data (sum of six-by-six locally adjacent picture elements/36) over a whole image. This arrangement is fundamentally identical to the arrangement for the maximum value, minimum value and median, with the exception of the logic device for finding an average value.

First, 36 sets of eight-bit picture element data are divided into six pieces of six sets of eight-bit picture element data, and the sum of said six sets of eight-bit picture element data is found for each pieces of data by the logic component 31 for finding the sum of six sets of eight-bit data (ADD6's), with the result always being 11 bits long. The six sets of 11-bit data are then added by the logic component 31 for finding the sum of 11-bit data (ADD6), calculating the sum of 14-bit, six-by-six locally adjacent eight-bit picture element data.

Further, the sum of 14-bit, six-by-six locally adjacent eight-bit picture element data is multiplied by 1/36 by the 1/36 multiplying component 32, thereby finding the average value.

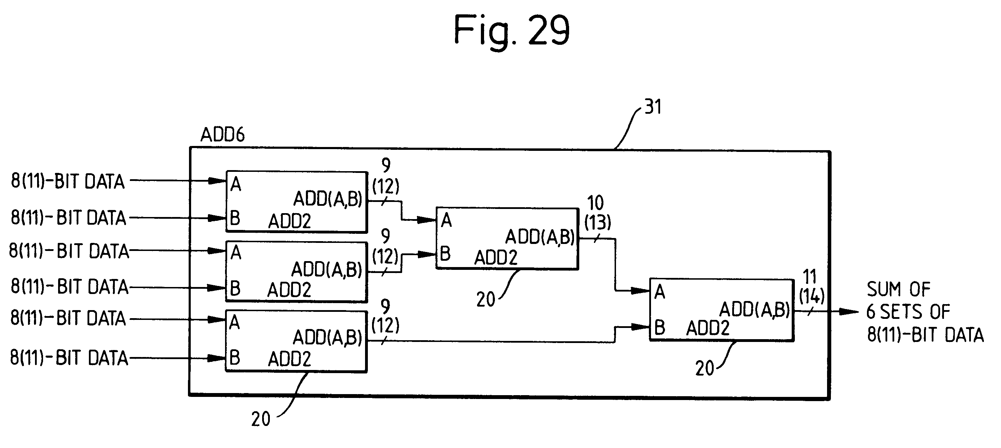

Fig. 29 shows the internal arrangement of the component 31 for finding the sum of six sets of eight-bit picture element data or 11-bit picture element data (ADD6), which further comprises five logic elements 20 for finding the sum of two sets of eight-bit to 13-bit picture element data (hereinafter referred to as the "ADD2). Accordingly, at least 35 eight-bit ADD2's are required.

The conventional image processor arranged as described above has a disadvantage that its circuitry is large in scale and high in cost.

## SUMMARY OF THE INVENTION

It is accordingly an object of the present invention to overcome the disadvantage of the background art by providing a low-priced image processor, having a small-scaled circuitry, that can find any of several arithmetic values for an object image.

This and other objects are achieved by dividing an object image comprising an array of N × M picture elements into first image pieces comprising A × B picture elements and providing adjacent processing of the image pieces. Then the result of the adjacent processing for each image piece is subject to further adjacent processing, thus yielding a processed result for an object image. The method comprises the conduct of adjacent processing of an image in at least two steps.

These and other objects also are accomplished by providing a multi-stage processing of a data stream defining picture elements in an object image. At least first and second stages involve the receipt and delay of image data on a row-by-row basis, the latching of a portion of the data in an image piece for adjacent processing and the further processing of the resultant image piece data by further delay , latching and adjacent processing in order to obtain with a minimum number of components the arithmetic processing of the object image.

BRIEF DESCRIPTION OF THE DRAWINGS

Fig. 1 is an arrangement diagram illustrating the entirety of an embodiment according to a first invention.

Fig. 2 shows the arrangement of means for calculating the maximum value of three sets of eight-bit data according to the embodiment of the first invention.

Fig. 3 is an arrangement diagram illustrating the entirety of an embodiment according to a second invention.

Fig. 4 shows the arrangement of means for calculating the minimum value of three sets of eight-bit data according to the embodiment of the second invention.

Fig. 5 is an arrangement diagram illustrating the entirety of an embodiment according to a third invention.

Fig. 6 shows the arrangement of means for deleting a minimum value and calculating eight sets of eight-bit picture element data from nine sets of eight-bit picture element data according to the embodiment of the third invention.

Fig. 7 shows the arrangement of means for calculating a minimum value and two sets of eight-bit picture element data other than the minimum value from three sets of eight-bit picture element data according to the embodiment of the third invention.

Fig. 8 shows the arrangement of means for calculating two sets of eight-bit picture element data other than the minimum value from three sets of eight-bit picture element data according to the embodiment of the third invention.

Fig. 9 shows the arrangement of means for calculating the maximum value and minimum value of two sets of eight-bit data according to the embodiment of the third invention.

Fig. 10 is an arrangement diagram illustrating the entirety of an embodiment according to a fourth invention.

Fig. 11 shows the arrangement of means for calculating the median of three sets of eight-bit picture element data according to the embodiment of the fourth invention.

Fig. 12 is an arrangement diagram illustrating the entirety of an embodiment according to a fifth invention.

Fig. 13 is an arrangement diagram illustrating the entirety of an embodiment according to a sixth invention.

Fig. 14 is an arrangement diagram illustrating the entirety of an embodiment according to a seventh invention.

Fig. 15 is a concept diagram for finding the maximum value of A $\times$ B adjacent picture element data.

Fig. 16 is a concept diagram for finding the maximum value of N/A $\times$ M/B adjacent picture element data.

Fig. 17A is an illustration of an entire detected image and the local area image comprising a plurality of adjacent picture elements that may be of interest in a factory automation environment.

Fig. 17B is an arrangement diagram illustrating the entirety of a conventional embodiment for finding a maximum value in a locally adjacent picture element area.

Fig. 18 shows the arrangement of components for calculating the maximum value of six sets of eight-bit data according to the embodiment shown in Fig. 17B.

Fig. 19 is an arrangement diagram illustrating the entirety of a conventional embodiment for finding a minimum value among a plurality of adjacent picture elements.

Fig. 20 shows the arrangement of components for calculating the minimum value of six sets of eight-bit data according to the embodiment shown in Fig. 19.

Fig. 21 is an arrangement diagram illustrating the entirety of an embodiment for finding a median in the background art.

Fig. 22 shows the arrangement of means for calculating 35 sets of eight-bit picture element data other than a minimum value from 36 sets of eight-bit picture element data and means for calculating 34 sets of eight-bit picture element data other than a minimum value from 35 sets of eight-bit picture element data according to the embodiment shown in Fig. 21.

Fig. 23 shows the arrangement of components for calculating the minimum value of 19 sets of eight-bit picture element data according to the embodiment shown in Fig. 21.

Fig. 24 shows the arrangement of components for calculating the minimum value of four sets of eight-bit picture element data according to the embodiment shown in Fig. 21.

Fig. 25 shows the arrangement of components for calculating a minimum value and five sets of eight-bit picture element data other than the minimum value from six sets of eight-bit picture element data according to the embodiment shown in Fig. 21.

Fig. 26 shows the arrangement of components for calculating five sets of eight-bit picture element data other than a minimum value from six sets of eight-bit picture element data according to the embodiment shown in Fig. 21.

Fig. 27 shows the arrangement of components for calculating a minimum value and four sets of eight-bit picture element data other than the minimum value from five sets of eight-bit picture element data according to the embodiment shown in Fig. 21.

Fig. 28 is an arrangement diagram showing the entirety of an embodiment for finding an average value in the background art.

Fig. 29 shows the arrangement of components for calculating the sum of six sets of eight-bit or 11-bit picture element data according to the embodiment shown in Fig. 28.

Fig. 30 is a concept diagram for finding the maximum value of N $\times$ M adjacent picture element data known in the art.

Fig. 31 shows the arrangement of MIN2 and MAX2 units according to the conventional embodiment shown in Fig. 21.

Fig. 32A shows a conventional arrangement and Fig. 32B shows an arrangement of the present invention for comparison purposes.

## DESCRIPTION OF THE PREFERRED EMBODIMENTS

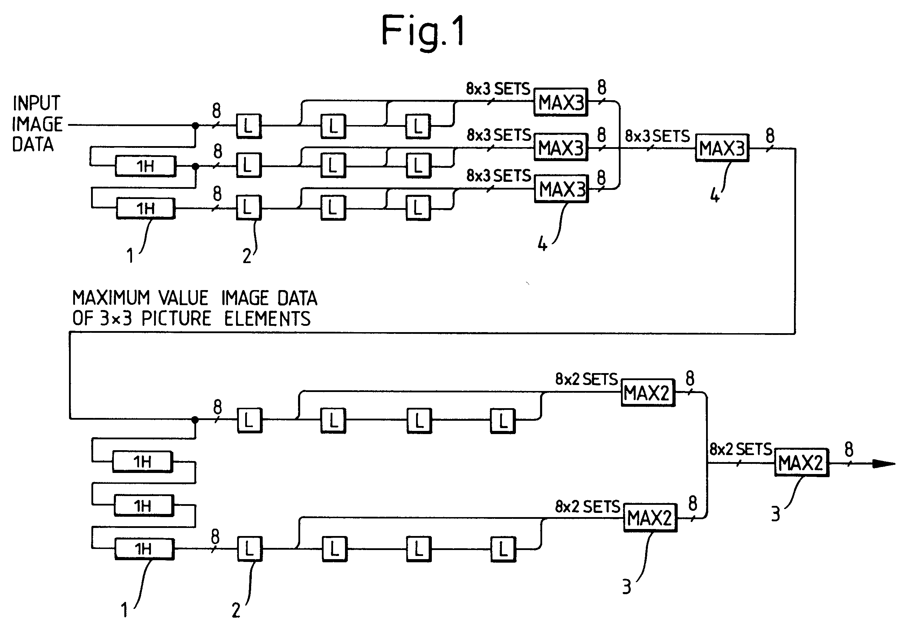

A first embodiment of the invention will now be described with reference to the appended drawings where a multiple stage processing arrangement is disclosed. Referring to Fig. 1, the numeral 1 indicates a delay device for picture elements on a single line, 2 a latch device for holding and latching the eight-bit data of a single picture element, 3 a logic element for calculating the maximum value of two sets of eight-bit picture element data, and 4 a logic component for calculating the maximum value of three sets of eight-bit picture element data.

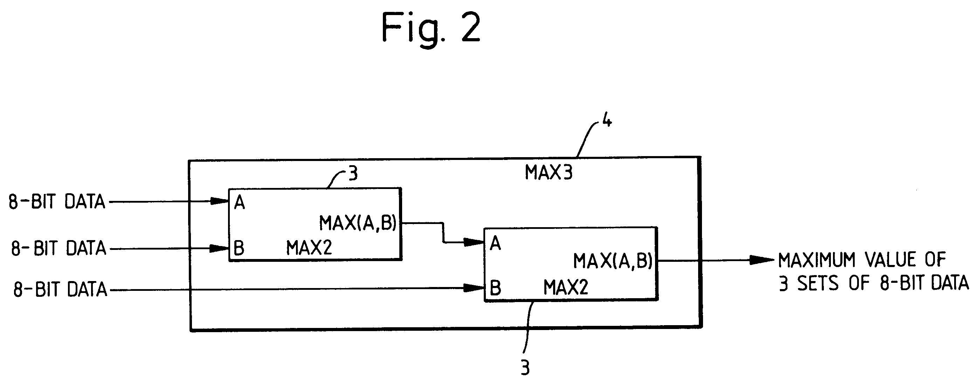

Fig. 2 shows the arrangement of the logic component 4 for calculating the maximum value of three sets of eight-bit picture element data, wherein the numeral 3 indicates the logic element for calculating the maximum value of two sets of eight-bit picture element data.

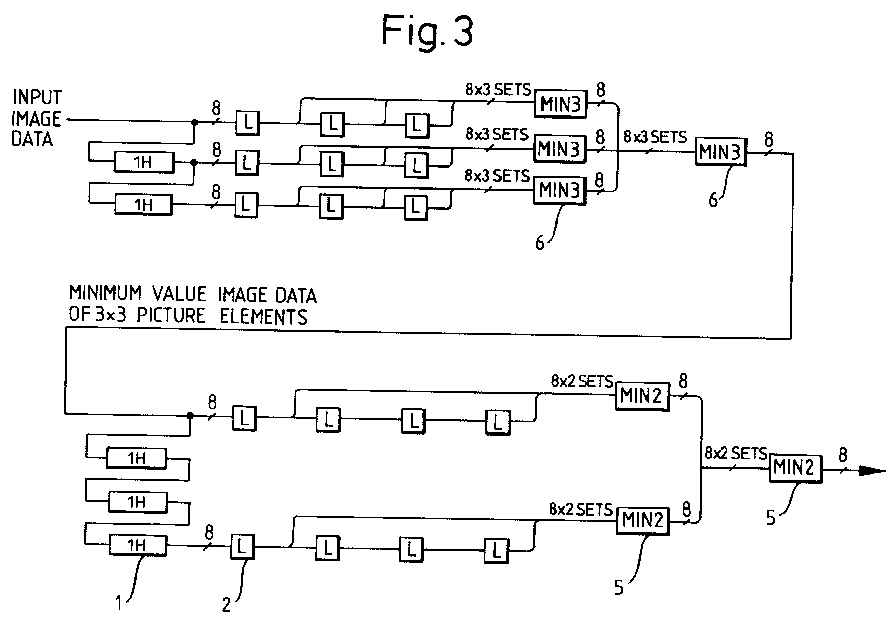

Similarly, in a second embodiment of the invention as illustrated in Fig. 3, the numeral 1 indicates a delay device for single-line picture elements, 2 a latch device for retaining and latching the eight-bit data of a single picture element, 5 a logic element for calculating the minimum value of two sets of eight-bit picture element data, and 6 a logic component for calculating the minimum value of three sets of eight-bit picture element data.

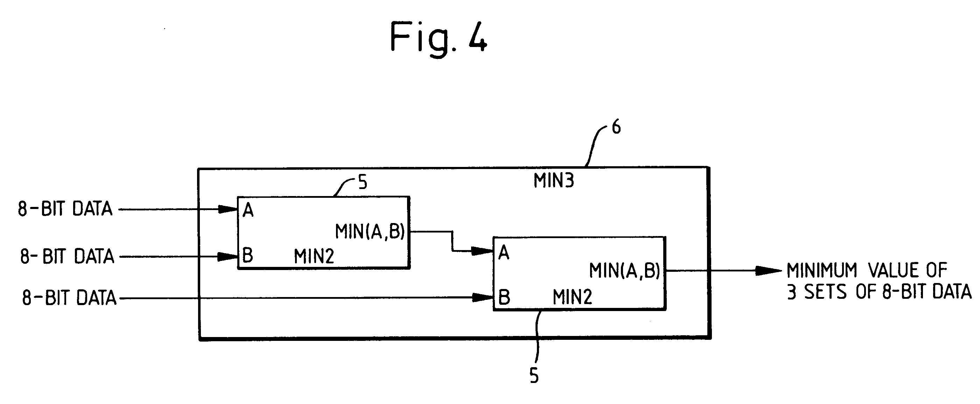

Fig. 4 shows the arrangement of a logic component 6 for calculating the minimum value of three sets of eight-bit picture element data, wherein the numeral 5 indicates a logic element for calculating the minimum value of two sets of eight-bit picture element data.

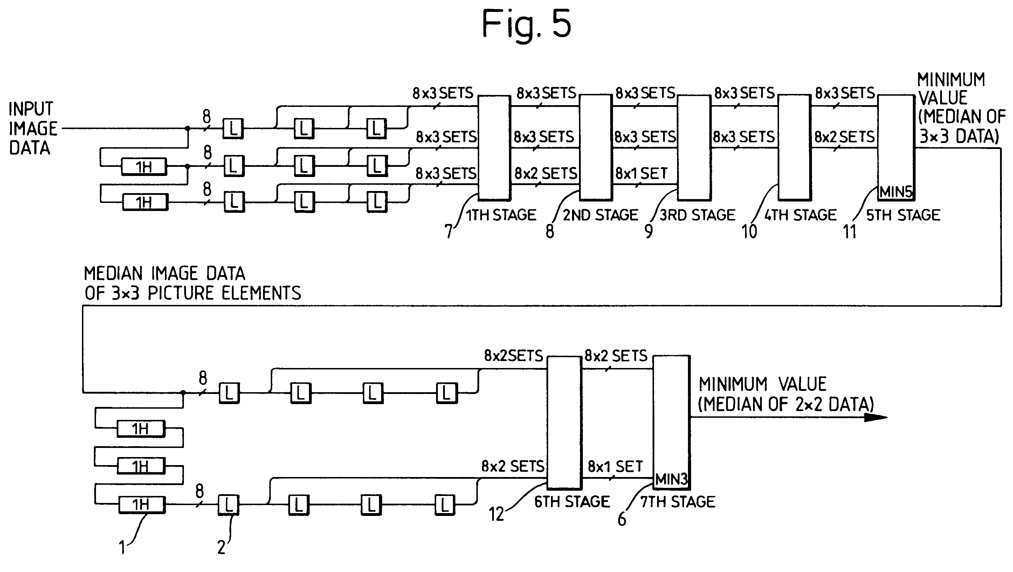

A third embodiment of the invention is seen in Fig. 5, where the illustrated system includes a single-line picture element delay device 1, a latch device 2 for holding and latching the eight-bit data of a single picture element, a logic device 7 for deleting a minimum value and calculating eight sets of eight-bit picture element data from nine sets of eight-bit picture element data, a logic device 8 for deleting a minimum value and calculating seven sets of eight-bit picture element data from eight sets of eight-bit picture element data, a logic device 9 for deleting a minimum value and calculating six sets of eight-bit picture element data from seven sets of eight-bit picture element data, a logic device 10 for deleting a minimum value and calculating five sets of eight-bit picture element data from six sets of eight-bit picture element data, a logic device 11 for calculating a minimum value from five sets of eight-bit picture element data, a logic device 12 for deleting a minimum value and calculating three sets of eight-bit picture element data from four sets of eight-bit picture element data, and a logic device 6 for calculating a minimum value from three sets of eight-bit picture element data.

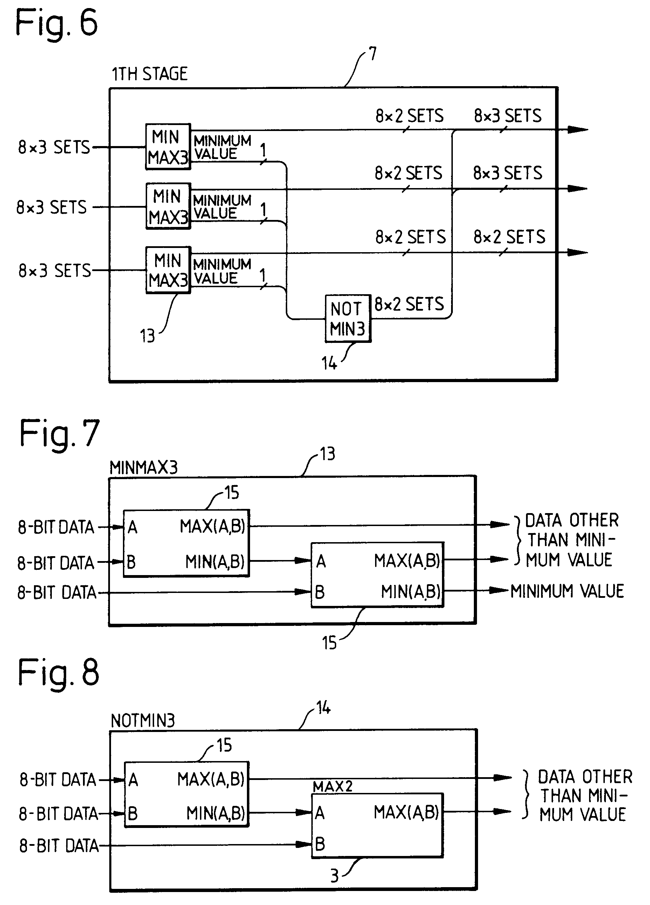

Fig. 6 shows the arrangement of the logic device 7 for deleting a minimum value and calculating eight sets of eight-bit picture element data from nine sets of eight-bit picture element data. The numeral 13 indicates a logic component for calculating a minimum value and two sets of eight-bit picture element data other than the minimum value from three sets of eight-bit picture element data, and 14 a logic component for deleting a minimum value and calculating two sets of eight-bit picture element data other than the minimum value from the three sets of eight-bit picture element data.

Fig. 7 shows the arrangement of the logic device 13 for calculating a minimum value and two sets of eight-bit picture element data other than the minimum value from three sets of eight-bit picture element data, comprising a logic element 15 for calculating the maximum value and minimum value of two sets of eight-bit picture element data.

Fig. 8 shows the arrangement of the logic device 14 for deleting a minimum value and calculating two sets of eight-bit picture element data other than the minimum value from three sets of eight-bit picture element data, comprising the logic component 15 for calculating the maximum value and minimum value of two sets of eight-bit picture element data and the logic element 3 for calculating the maximum value only.

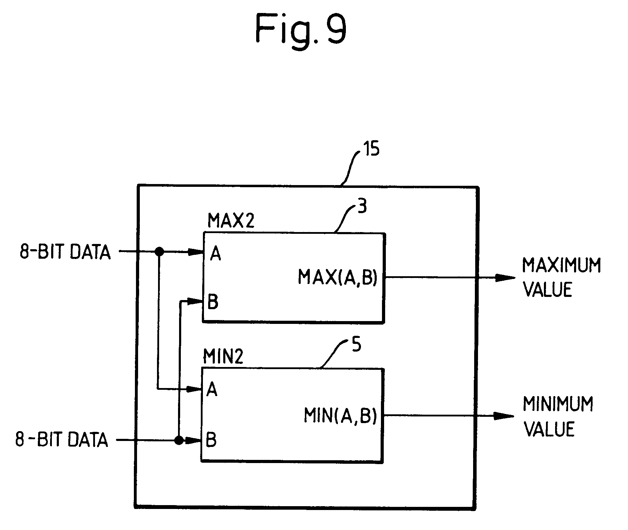

Fig. 9 shows the arrangement of the logic component 15 for calculating the maximum value and minimum value of two sets of eight-bit picture element data, comprising the logic element 3 for calculating the maximum value only and the logic element 5 for calculating the minimum value only.

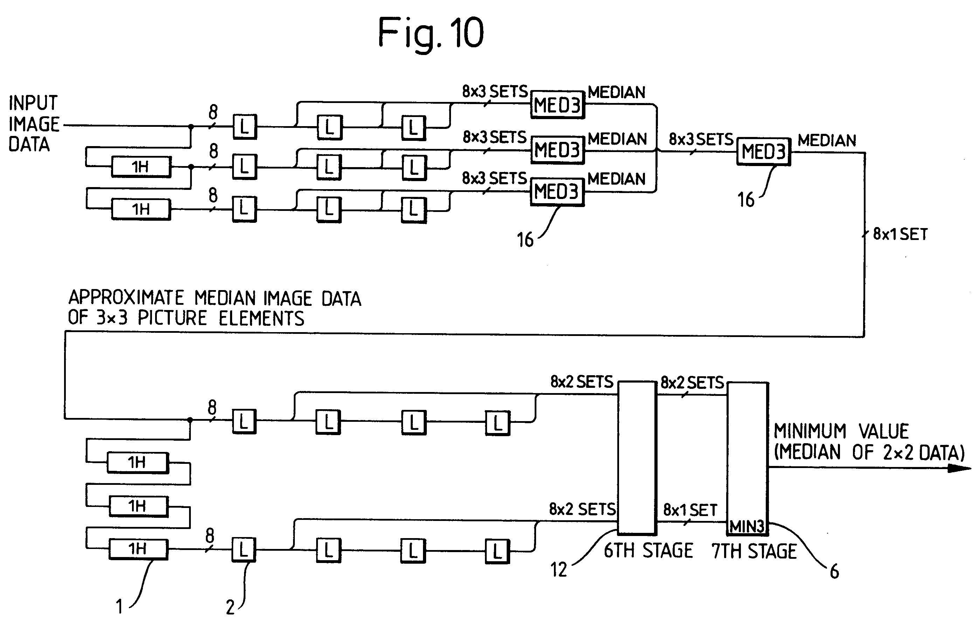

A fourth embodiment of the invention will now be described with reference to the appended drawings. Referring to Fig. 10, the embodiment comprises delay devices 1 for single-line picture elements, latch devices 2 for holding and latching the eight-bit data of a single picture element, logic device 16 for calculating the median of three sets of eight-bit picture element data, logic component 12 for deleting a minimum value and calculating three sets of eight-bit picture element data from four sets of eight-bit picture element data, and logic component 6 for calculating a minimum value from three sets of eight-bit picture element data.

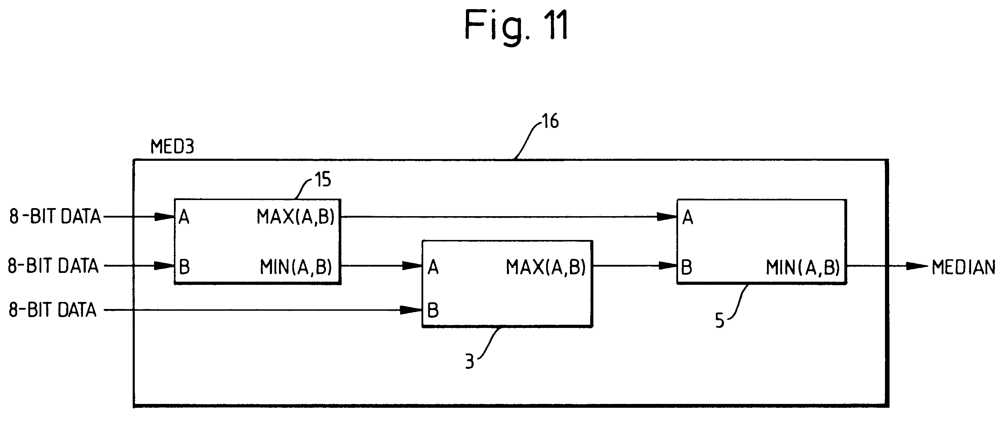

Fig. 11 shows the arrangement of the logic device 16 for calculating the median of three sets of eight-bit picture element data, comprising the logic component 15 for calculating the maximum value and minimum value of two sets of eight-bit picture element data, the logic element 3 for calculating the maximum value, and the logic element 5 for calculating the minimum value.

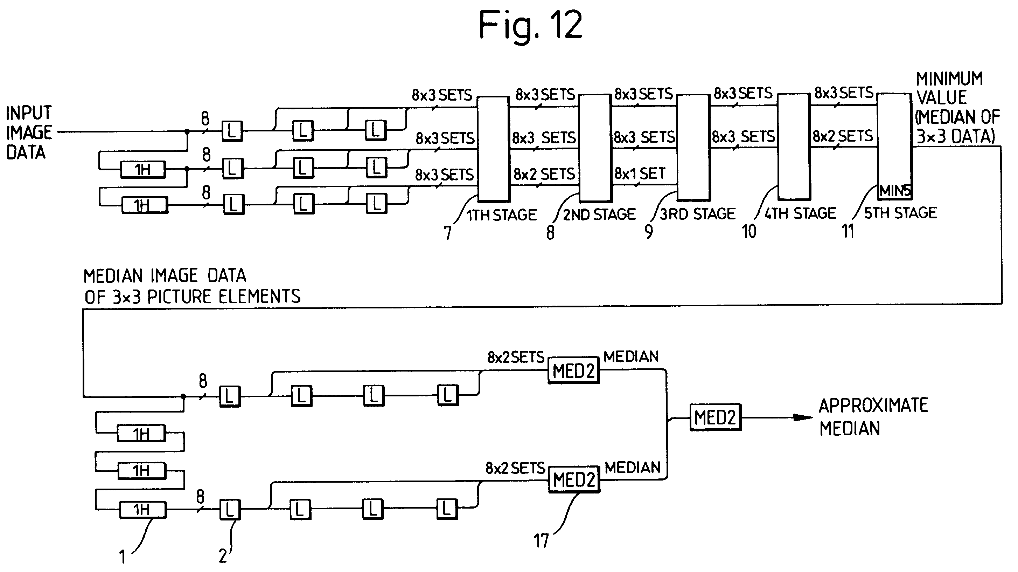

A fifth embodiment of the invention will now be described with reference to Fig. 12, wherein the numeral 1 indicates a delay device for single-line picture elements and 2 a latch device for holding and latching the eight-bit data of a single picture also included an element. A logic device 7 for deleting a minimum value and calculating eight sets of eight-bit picture element data from nine sets of eight-bit picture element data, a logic device 8 for deleting a minimum value and calculating seven sets of eight-bit picture element data from eight sets of eight-bit picture element data, a logic device 10 for deleting a minimum value and calculating six sets of eight-bit picture element data from seven sets of eight-bit picture element data, a logic device 11 for deleting a minimum value and calculating five sets of eight-bit picture element data from six sets of eight-bit picture element data, a logic device for calculating a minimum value from five sets of eight-bit picture element data, and a logic component 17 for calculating a median from two sets of eight-bit picture element data, which may be replaced by the logic element 5 for calculating the minimum value of two sets of eight-bit picture element data.

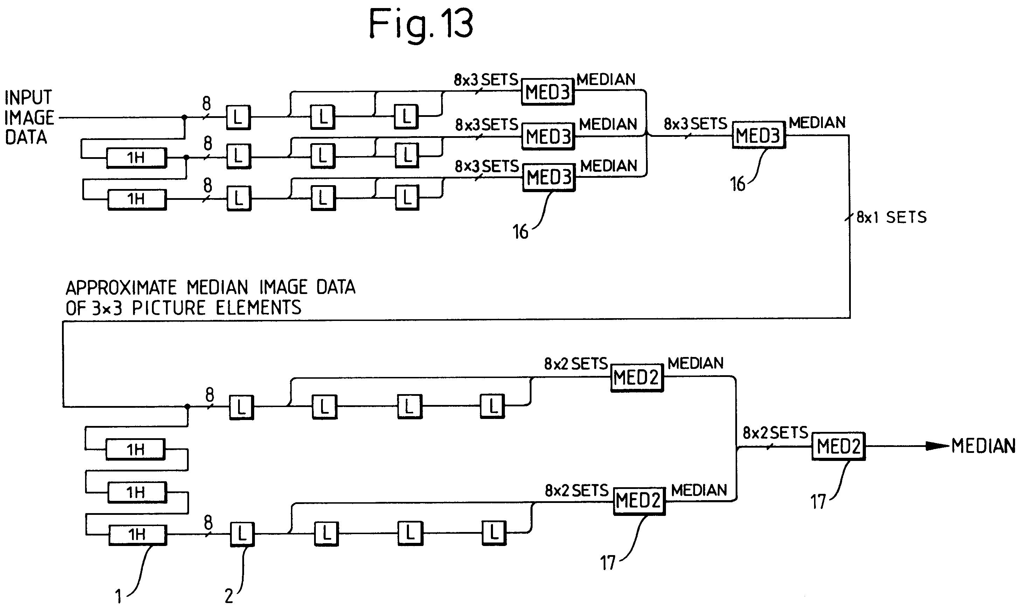

A sixth embodiment of the invention will now be described with reference to Fig. 13, wherein the numeral 1 indicates a delay device for single-line picture elements, 2 a latch device for holding and latching the eight-bit data of a single picture element, a logic component 16 for calculating the median of three sets of eight-bit picture element data, and a logic component 17 for calculating the median of two sets of eight-bit picture element data, which may be replaced by the logic element 5 for calculating the minimum value of two sets of eight-bit picture element data.

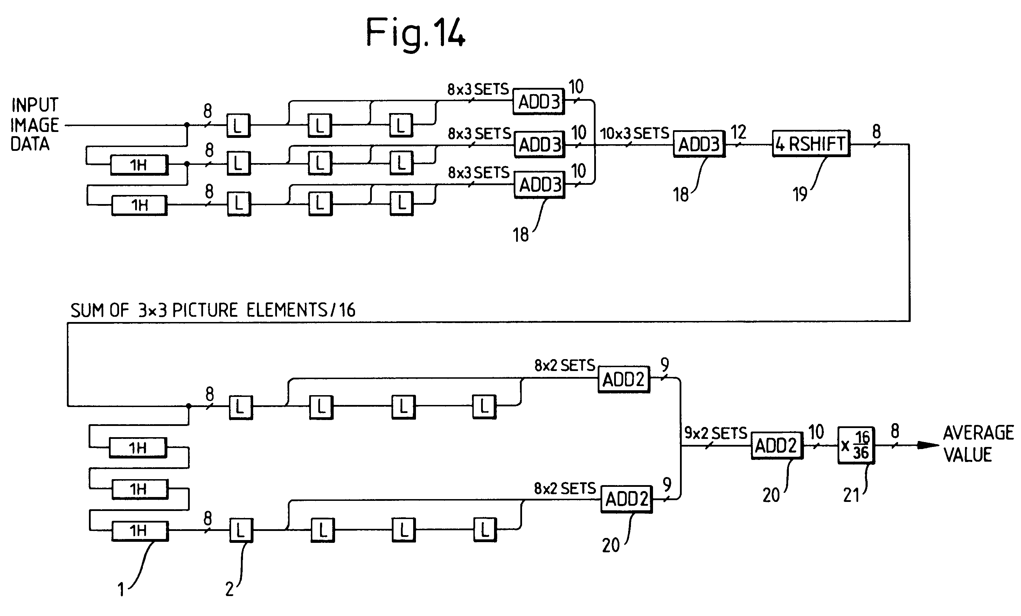

A seventh embodiment of the invention will now be described with reference to Fig. 14, wherein the numeral 1 indicates a delay device for single-line picture elements, and 2 a latch device for holding and latching the eight-bit data of a single picture element. Also included is an adder 18 for adding three sets of eight-bit or 10-bit picture element data, a logic element 19 for right-shifting 12-bit picture element data four bit positions and outputting eight bits in an integer part among said 12 bits, an adder 20 for adding eight-bit or nine-bit picture element data, and a multiplier for multiplying 10-bit picture element data by 16/36.

The operation of the first embodiment will now be described with reference to the appended drawings.

In accordance with each of subsequently described embodiments of the present invention, the maximum value of $N = 6$, $M = 6$, i.e., six-by-six adjacent eight-bit picture element data in relation to all picture elements of a subject image is calculated by first dividing the subject image into image pieces of AxB size and then calculating the maximum value of $A = 3$, $B = 3$, i.e., three-by-three, adjacent eight-bit picture element data concerning all picture elements of the subject image. Then, two-by-two adjacent eight-bit picture element data are fetched from the processed image. Finally, a maximum value again is calculated as for all picture elements of the processed image.

Initially, the process will be described up to a step where the maximum value of three-by-three adjacent eight-bit picture element data is calculated as to all picture elements of the subject image.

Referring to Fig. 1, eight-bit input image data is entered successively into two single-line picture element delay elements 1, whereby three groups of delayed eight-bit picture element data are provided on lines 0 to 2 in a vertical direction.

The three groups of delayed eight-bit picture element data are then entered into three latch devices 2 on a line basis, whereby three groups of delayed eight-bit picture element data are provided for picture elements 1 to 3 in a horizontal direction.

Accordingly, a total of nine (3 × 3) pieces of delayed eight-bit picture element data are provided, i.e., three lines in the vertical direction and three picture elements in the horizontal direction, thereby generating so-called "three-by-three locally adjacent eight-bit picture element data.

The three-by-three locally adjacent eight-bit picture element data is grouped into three sets of eight-bit picture element data per line and a total of three maximum values are calculated by the logic components 4 for calculating the maximum value of three sets of eight-bit picture element data.

Then, the three maximum values are further entered into the next stage, i.e., the logic component 4 for calculating the maximum value of the three sets of eight-bit picture element data, where a maximum value is calculated. The maximum value is the maximum value of the nine pieces of three-by-three adjacent eight-bit picture element data.

Fig. 2 shows the internal arrangement of the logic component 4 for calculating the maximum value of three sets of eight-bit picture element data, comprising two logic elements 3 for calculating the maximum value of two sets of eight-bit picture element data (hereinafter referred to as the MAX2). Assuming that the MAX2 is a basic unit, the number of MAX2's required to find the maximum value of three-by-three adjacent picture element data is:

MAX2 = 2 × 4 = 8 components

Also, the numbers of delay and latch devices required to generate the three-by-three adjacent eight-bit picture element data are:

Single-line picture element delay device (hereinafter referred to as the "1H") = 2 components.
Latch device (hereinafter referred to as the "L") = 9 components.

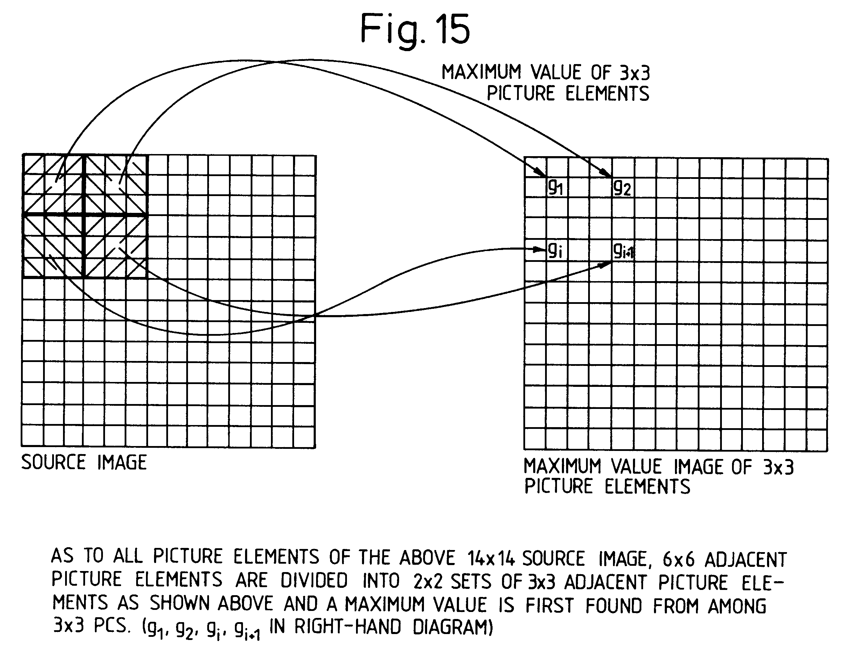

Fig. 15 shows the concept of dividing six-by-six adjacent picture elements of a 14-by-14 source image into two-by-two sets, i.e., creating four sets of three-by-three adjacent picture elements as to all picture elements of the 14-by-14 source image. The processing is conducted in two stages, a three-by-three processing stage followed by a two-by-two processing stage.

Initially in the first stage, a maximum value in each of the four groups of three-by-three adjacent picture elements in the "source image" is calculated. As a result, the following four picture elements:

$g_1, g_2, g_i, g_{i+1}$

are identified in the "maximum value image" of the three-by-three picture elements of the same Figure. Each of the four picture elements is the maximum value of the corresponding three-by-three adjacent picture elements. Next, this three-by-three adjacent picture element processing is repeated for different three-by-three groupings of picture elements. Specifically, the entire six-by-six area of adjacent picture elements is moved by one picture element to the right and the three-by-three processing is again conducted and a new set of maximum values ($h_1, h_2, h_i, h_{i+1}$) are generated in the maximum value image". Thereafter, the six-by-six grouping of picture elements moves by one element from left to right and from top to bottom of the source image and calculates the maximum values over the entire source image.

As a result of this processing, eight-bit input image data is entered successively on a pipeline basis and the maximum values of the three-by-three adjacent picture element data are also output successively on a pipeline basis.

The first stage process will now be described up to the beginning of the second stage where two-by-two adjacent eight-bit picture element data is fetched properly from the processed image of the maximum values of the three-by-three adjacent picture element data and a maximum value is calculated again on all picture elements of the processed image.

If $g_1$, $g_2$, $g_i$ and $g_{i+1}$ from the maximum value image of the three-by-three picture elements are fetched and a maximum value among them is found, it will be seen that the maximum value found is the maximum value of the entire hatched six-by-six adjacent picture elements shown in the source image.

Hence, as shown in Fig. 1, the maximum value image data of the three-by-three adjacent eight-bit picture element data is output from element 4 and entered successively into the three single-line picture element delay devices 1. The illustrated arrangement provides two groups of eight-bit picture element data, the first group being delayed zero lines and the second group being delayed three lines in a vertical direction.

The two groups of delayed eight-bit picture element data are then entered into the four latch devices 2 on a line basis. The first group of eight-bit picture element data is delayed one picture element and the second group is delayed four picture elements in a horizontal direction.

Accordingly, the following two-by-two picture elements are provided:
- A picture element zero lines ahead in the vertical direction and zero picture elements ahead in the horizontal direction (equivalent to $g_1$ in Fig. 15),
- A picture element zero lines ahead in the vertical direction and three picture elements ahead in the horizontal direction (equivalent to $g_2$ in Fig. 15),
- A picture element three lines ahead in the vertical direction and zero picture elements ahead in the horizontal direction (equivalent to $g_i$ in Fig. 15), and
- A picture element three lines ahead in the vertical direction and three picture elements ahead in the horizontal direction (equivalent to $g_{i+1}$ in Fig. 15).

If the six-by-six adjacent picture elements of the source image are other than those shown in the example of Fig. 15, e.g., if the six-by-six area is moved by a value "a" in the vertical direction and by a value "b" in the horizontal direction, the maximum values of the four three-by-three groups may be represented as follows. Assuming that the maximum values of the four sets of three-by-three adjacent picture elements are $h_1(X_1, Y_1)$, $h_2(X_2, Y_2)$, $h_i(X_i, Y_i)$ and $h_{i+1}(X_{i+1}, Y_{i+1})$ (where $X_k$, $X_k$ are the coordinates of $h_k$) and the coordinates of $g_1$ are x, y:

$$h_1(X_1, Y_1) = g_1(x+b, y+a)$$
$$h_2(X_2, Y_2) = g_2(x+3+b, y+a) = h_2(X_1+3, Y_1)$$
$$h_i(X_i, Y_i) = g_i(x+b, y+3+a) = h_i(X_i, Y_i+3)$$
$$h_{i+1}(X_{i+1}, Y_{i+1}) = g_{i+1}(x+3+b, y+3+a) = hi+1(X_1+3, Y_i+3)$$

and produce the same results as in:

$$g_1(x, y), g_2(x+3), g_i(x, y+3), g_{i+1}(x+3, y+3)$$

and do not depend on the movement (a, b) of the six-by-six adjacent picture elements in the source image.

In other words, the maximum value of the six-by-six adjacent picture element data is found by calculating the maximum values of three-by-three adjacent picture element data in the "source image", delaying the resultant maximum values by three picture elements in the vertical and horizontal directions, always fetching two-by-two adjacent eight-bit picture element data, and finding their maximum value.

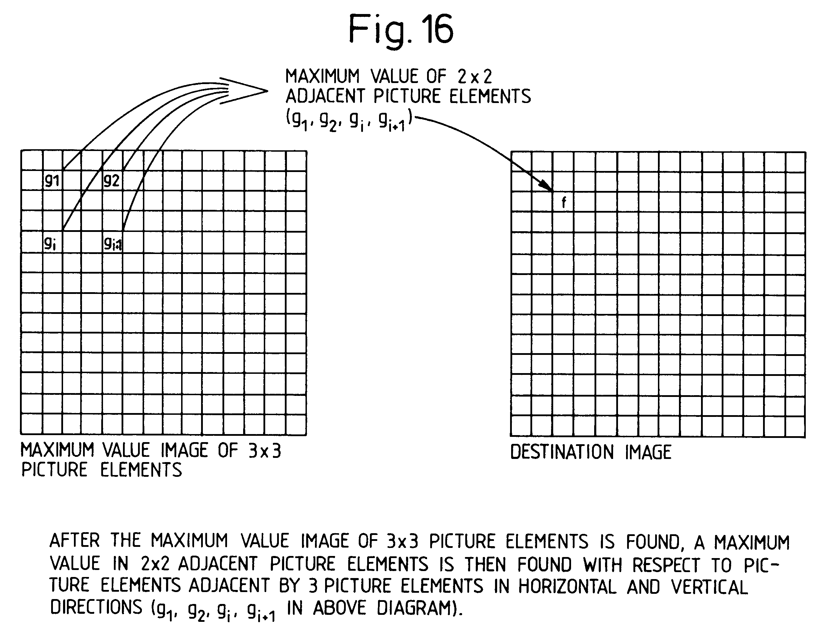

Fig. 16 shows the concept of fetching the two-by-two picture element data, i.e., $g_1$, $g_2$, $g_i$ and $g_{i+1}$, from the "maximum value image" of the three-by-three picture elements, calculating their maximum value f, and generating a "destination image".

As shown in Fig. 1, the two-by-two adjacent eight-bit picture element data is grouped into two sets of eight-bit picture element data on a line basis, their maximum values are calculated by two MAX2's, and the maximum value image data of the two-by-two adjacent picture element data in the whole image is further calculated by the next MAX2.

Hence,

MAX2 = 3 components.
1H = 3 components.
L = 8 components.

are required.

In the entirety of the present embodiment:

MAX2 = 8 + 3 = 11 components.

1H = 2 + 3 = 5 components.
L = 9 + 8 = 17 components.

are required. As compared to the conventional design, i.e:

MAX2 = 35 components.
1H = 5 components.
L = 36 components.

the circuitry scale is smaller.

The operation of the second embodiment will now be described with reference to the appended drawings.

The second embodiment is identical to the first embodiment with the exception that the logic for calculating the maximum value are replaced by logic for calculating the minimum value.

Referring now to Fig. 3, the logic components 6 for calculating the minimum value of three sets of eight-bit picture element data and the logic elements 5 for calculating the minimum value of two sets of eight-bit picture element data are different from the first embodiment in Fig. 1. Fig. 4 shows the arrangement of the logic components 6 for calculating the minimum value of three sets of eight-bit picture element data, which comprises two logic elements 5 for calculating the minimum value of two sets of eight-bit picture element data.

The logic element 5 for calculating the minimum value of two sets of eight-bit picture element data is hereinafter referred to as the "MIN2". The second embodiment requires:

MIN2 = 11 components.
1H = 5 components.
L = 17 components.


As compared to the conventional design:

MIN2 = 35 components.
1H = 5 components.
L = 36 components.

the circuitry scale becomes smaller.

The operation of the third embodiment will now be described with reference to the appended drawings.

The principle of the known median filter is to suppress the obscurity of an original image by outputting a median so as to eliminate the influence of any conspicuously different value (reverse) in an outstanding picture element and its vicinity, thereby removing noise. In contrast, the present invention further divides the adjacent N × M (6 × 6 in the embodiment) picture elements of a subject picture element into N/A × M/B image pieces (2 × 2 = 4 pieces in the embodiment) by the adjacent A × B (3 × 3 in the embodiment) picture elements, finds a median within each of the A × B picture elements, further finds and outputs a median from among the resultant N/A × M/B medians for the image pieces (four medians in the embodiment), whereby the conspicuously different value in the original image can be suppressed to eliminate noise.

Accordingly, the present embodiment cannot calculate an accurate median in the N × M picture elements but can calculate an approximate median in the N × M array.

Fig. 5 shows the logic for calculating a fifth smallest value, i.e., the median of three-by-three adjacent picture element data, from the three-by-three adjacent eight-bit picture element data, fetching two-by-two adjacent eight-bit picture element data appropriately as in the first and second embodiments, and further calculating a second smallest value, i.e., the median of the two-by-two adjacent picture element data.

The median of the three-by-three adjacent eight-bit picture element data is calculated as follows. First, in Fig. 5, the three-by-three adjacent, i.e., nine sets of, eight-bit picture element data are reduced to eight sets of eight-bit picture element data by the logic device 7 for deleting the minimum value and calculating eight sets of eight-bit picture element data from nine sets of eight-bit picture element data (hereinafter referred to as the "first stage"). The eight sets of eight-bit picture element data are then reduced to seven sets of eight-bit picture element data by the logic device 8 for deleting the minimum value and calculating seven sets of eight-bit picture element data from eight sets of eight-bit picture element data (hereinafter referred to as the "second stage"). Similarly, they are reduced to six sets of eight-bit picture element data,

12

then five sets of eight-bit picture element data, and the minimum value is found by the logic device 11 for calculating the minimum value of the five sets of eight-bit picture element data (hereinafter referred to as the "fifth stage"). This minimum value is the median of the three-by-three adjacent eight-bit picture element data.

Fig. 6 shows the internal arrangement of the logic device 7 for deleting the minimum value and calculating eight sets of eight-bit picture element data from nine sets of eight-bit picture element data (first stage), comprising three logic components 13 for calculating the minimum value of three sets of eight-bit picture element data and data other than the minimum value (hereinafter referred to as the "MINMAX3") and one logic component 14 for deleting the minimum value and calculating two sets of eight-bit picture element data from three sets of eight-bit picture element data (hereinafter referred to as the "NOTMIN3").

Fig. 7 shows the internal arrangement of the MINMAX3, comprising two logic components 15 for calculating the maximum value and minimum value of two sets of eight-bit picture element data. As shown in Fig. 9, the logic component 15 for calculating the maximum and minimum values of two sets of eight-bit picture element data comprises one MAX2 and one MIN2. Therefore, the MINMAX3 comprises:

$$\text{MINMAX3} = \text{MAX2} \ldots 2 \text{ components}$$
$$\text{MIN2} \ldots 2 \text{ components}$$

Fig. 8 shows the internal arrangement of the NOTMIN3. By making a similar calculation, the NOTMIN3 comprises:

$$\text{NOTMIN3} = \text{MAX2} \ldots 2 \text{ components}$$
$$\text{MIN2} \ldots 1 \text{ component}$$

Hence, the "first stage" to "fifth stage" in Fig. 5 comprise:

$$\text{First stage} = \text{MAX2} \ldots 3 \times 2 + 2 = 8 \text{ components}$$
$$\text{MIN2} \ldots 3 \times 2 + 1 = 7 \text{ components}$$
$$\text{Second stage} = \text{MAX2} \ldots 2 \times 2 + 1 \times 1 + 2 = 7 \text{ comp.}$$
$$\text{MIN2} \ldots 2 \times 2 + 1 \times 1 + 1 = 6 \text{ comp.}$$
$$\text{Third stage} = \text{MAX2} \ldots 2 \times 2 + 2 = 6 \text{ components}$$
$$\text{MIN2} \ldots 2 \times 2 + 1 = 5 \text{ components}$$
$$\text{Fourth stage} = \text{MAX2} \ldots 2 \times 2 + 1 = 5 \text{ components}$$
$$\text{MIN2} \ldots 2 \times 2 + 0 = 4 \text{ components}$$
$$\text{Fifth stage} = \text{MAX2} \qquad = 0 \text{ components}$$
$$\text{MIN2} \qquad = 4 \text{ components}$$

Rearranged, the numbers of MAX2's and MIN2's required to calculate the median of the three-by-three adjacent picture element data are:

MAX2 = 8 + 7 + 6 + 5 + 0 = 26 components

MIN2 = 7 + 6 + 5 + 4 + 4 = 26 components

Similarly, in order to calculate the median of two-by-two adjacent picture element data, the logic device 12 for deleting a minimum value and calculating three sets of eight-bit picture element data from four sets of eight-bit picture element data (hereinafter referred to as the "sixth stage") and the means for calculating a minimum value from the three sets of eight-bit picture element data (hereinafter referred to as the "seventh stage") are used, which comprise the following MAX2's and MIN2's:

```
Sixth stage   = MAX2 ... 2 X 1 + 1 = 3 comp.

                MIN2 ... 2 X 1 + 0 = 2 comp.

Seventh stage = MAX2 ...         = 0 comp.

                MIN2 ...         = 2 comp.
```

Rearranged, the numbers of MAX2's and MIN2's required to calculate the median of the two-by-two adjacent picture element data are:

MAX2 = 3 components
MIN2 = 2 + 2 = 4 components

In the present embodiment, therefore,

MAX2 = 29 components
MIN2 = 30 components
1H = 5 components
L = 17 components

By contrast, the conventional design requires the following devices for finding the accurate median of the six-by-six adjacent picture element data:

MAX2 = 459 components
MIN2 = 460 components
1H = 5 components
L = 36 components

Hence, the present invention allows the number of MAX2's and MIN2's to be reduced considerably.

The operation of the fourth embodiment will now be described with reference to the appended drawings.

As opposed to the third embodiment wherein the median of the three-by-three adjacent, i.e., nine pieces of, eight-bit picture element data was calculated, the fourth embodiment is designed to divide the three-by-three adjacent picture element data into three image pieces of three sets of eight-bit picture element data on a line basis, find a median for each line, further find a median from the three resultant medians, and output an approximate median in a three-by-three adjacent picture element data stage.

Like the third embodiment, an accurate value is found for the median of the two-by-two picture element data in a second half process.

Namely, unlike the third embodiment wherein the median of A × B adjacent picture element data is calculated among the N × M adjacent picture element data, the fourth embodiment finds medians for each of the B image pieces of the A × 1 adjacent picture element data simultaneously, further finds a median from the medians for the B image pieces, and employs the resultant median as the median of the A × B adjacent picture element data.

This embodiment also allows the elimination of noise, like the median filter, without obscuring the original image.

Fig. 10 shows an arrangement of the present invention, wherein the medians of three sets of eight-bit picture element data are found at the same time by the logic component 16 for calculating the median of three sets of eight-bit picture element data (hereinafter referred to as the "MED3"), and their median is further found by the next MED3. The subsequent process is identical to that of the third embodiment shown in Fig. 5.

Fig. 11 shows the arrangement of the MED3 comprising two MIN2's and two MAX2's. Hence, a first half section of the present embodiment comprises:

MAX2 = 4 X 2 = 8 comp.
MIN2 = 4 X 2 = 8 comp.

A second half section comprises:

MAX2 = 3 comp.
MIN2 = 4 comp.

As a whole,

MAX2 = 11 comp.
MIN2 = 12 comp.
1H = 5 comp.
L = 17 comp.

By contrast, the conventional design requires the following devices to find the accurate median of the six-by-six adjacent picture element data:

MAX2 = 459 comp.
MIN2 = 460 comp.
1H = 5 comp.
L = 36 comp.

Hence, the present embodiment greatly reduces the number of MAX2's and MIN2's employed.

The operation of the fifth embodiment will now be described with reference to the appended drawing.

As opposed to the third embodiment wherein the median of the two-by-two adjacent, i.e., four pieces of eight-bit picture element data was calculated, the fifth invention is designed to divide the two-by-two adjacent picture element data into two pieces of two sets of eight-bit picture element data on a line basis, find a median for each line, further find a median from the two resultant medians, and output an approximate median in a two-by-two adjacent picture element data stage.

Like the third embodiment, an accurate value is found for the median of the three-by-three picture element data in a first half process.

Namely, unlike the third embodiment wherein the median of N/A × M/B adjacent picture element data is calculated, the present embodiment finds the median of M/B image pieces of N/A × 1 adjacent picture element data at the same time, and further finds a median from said medians for said M/B image pieces, and uses the resultant median as the median of the N/A × M/B adjacent picture element data.

This embodiment also eliminates noise, like the median filter, without obscuring the original image.

Fig. 12 shows the arrangement of the fifth embodiment wherein the medians of two sets of eight-bit picture element data are found simultaneously by the logic component 17 for calculating the median of two sets of eight-bit picture element data (hereinafter referred to as the "MED2"), and their median is further found by the next MED2. A first-half process is identical to that of the third embodiment in Fig. 5.

Hence, a first half section of the present embodiment comprises:

MAX2 = 26 comp.
MIN2 = 26 comp.
and a second half section comprises:

MAX2 = 0 comp.
MIN2 = 3 comp.

As a whole;

MAX2 = 26 comp.
MIN2 = 29 comp.
1H = 5 comp.
L = 17 comp.

In contrast, the conventional design requires the following devices to find the accurate median of the six-by-six adjacent picture element data:

MAX2 = 459 comp.
MIN2 = 460 comp.
1H = 5 comp.
L = 36 comp.

Hence, the present invention allows the number of MAX2'S and MIN2's to be reduced sharply.

The operation of the sixth embodiment will now be described with reference to the appended drawing.

By making the process of calculating the median of the two-by-two adjacent eight-bit picture element data in the second half process of the fourth embodiment identical to that of the fifth embodiment, the present invention is designed to divide the two-by-two adjacent picture element data into two pieces of two sets of eight-bit picture element data on a line basis, find a median for each line, further find a median from the two resultant medians, thereby further finding and outputting an approximate median of the two-by-two adjacent picture element data from the approximate medians of the three-by-three adjacent picture element data.

Although the median calculated by this embodiment is approximate, unlike the one found by the median filter, this embodiment can also eliminate noise without obscuring the original image.

Fig. 13 shows the arrangement of the present embodiment, wherein the three-by-three adjacent eight-bit picture element data is divided into three sets of data on a line basis, three medians are calculated by the MED3's 16, and their median is further calculated by the next MED3 16.

As in the first embodiment, the two-by-two adjacent eight-bit picture element data is then fetched and divided into two sets of data on a line basis, two medians are calculated by the MED2's 17, and their median is further calculated by the next MED2 17 and employed as the approximate median of the six-by-six adjacent picture element data.

Hence, a first half section of the present embodiment comprises:

MAX2 = 8 comp.
MIN2 = 8 comp.

and a second half section comprises:

MAX2 = 0 comp.
MIN2 = 3 comp.

As a whole;

MAX2 = 8 comp.
MIN2 = 11 comp.
1H = 5 comp.
L = 17 comp.

In contrast, the conventional design requires the following devices to find the accurate median of the six-by-six adjacent picture element data:

MAX2 = 459 comp.
MIN2 = 460 comp.
1H = 5 comp.
L = 36 comp.

Hence, the present invention allows the number of MAX2'S and MIN2's to be reduced steeply.

The operation of the seventh embodiment will now be described with reference to the appended drawing.

The present embodiment is identical to the first to sixth embodiment in the method of dividing the process of finding a value by multiplying the sum of six-by-six adjacent eight-bit picture element data by 1/36, i.e., an average value, into two stages of the first-half three-by-three adjacent processing and the second-half two-by-two adjacent processing.

Fig. 14 shows the arrangement of the present embodiment. From the three-by-three adjacent eight-bit picture element data obtained as in the first to sixth embodiment, the sums of three sets of 10-bit data are calculated at the same time by the adders 18 of three sets of eight-bit or 10-bit data (hereinafter referred to as the "ADD3's"), and the 12-bit sum of the three sets of 10-bit data is further calculated by the next ADD3 18.

Here, the power of two greater than $(A \times B)$ and nearest to $(A \times B)$ is found as follows:

$$A \times B = 3 \times 3 = 9$$

Hence, $2^4 = 16$ is a greater and nearer value found from the following relationship:

$$2^3 = 8$$
$$2^4 = 16$$

Therefore, the 12-bit sum is multiplied by 1/16 by the logic component 19 for right-shifting 12-bit picture element data by four bit positions. When the 12-bit sum is shifted right four bit positions, an integer part is eight bits long. Here, a fraction part is ignored and only the eight bits in the integer part are entered into the single-line delay devices 1 and latch devices 2 for generating two-by-two picture element data in the next stage.

It should be noted that the component for right-shifting data four bit positions does not require any logic devices. The output of only the eight high-order bits in the 12-bit data output by the ADD3 18 is equivalent to the shifting of the data right four bit positions, though the fraction part is ignored.

From the two-by-two adjacent eight-bit picture element data obtained as in the first to sixth embodiments, the sums of two sets of 9-bit data are calculated at the same time by the adders 20 of two sets of eight-bit or nine-bit data (hereinafter referred to as the "ADD2's"), and the 10-bit sum of the two sets of nine-bit data is further calculated by the next ADD2 20.

The resultant 10-bit sum is multiplied by 16/36 by the 16/36 multiplying means 21 and its eight-bit integer part is output. This output data is a so-called average value obtained by multiplying the sum of the six-by-six adjacent eight-bit picture element data by 1/36.

Assuming that the power of two larger than $(A \times B)$ and nearest to $(A \times B)$ is $2^n$, the operation of multiplying the sum of $A \times B$ locally adjacent picture element data by $1/2^n$ by shifting the sum of the $A \times B$ locally adjacent picture element data right "n" bit positions will now be described.

This processing is implemented to equalize the number of bits of input picture element data of the means for multiplying the sum of $A \times B$ locally adjacent picture element data by $1/2^n$ with the number of bits of output picture element data thereof, without employing a divider.

The process of equalizing the number of bits of the input picture element data with the number of bits of the output picture element data is carried out to make the number of bits of the preceding delay devices (single line, single picture element) equal to the number of bits of the subsequent delay devices, thereby allowing identical devices to be employed.

Suppose that "a" is the number of bits of picture elements entered into the means for finding the sum of $A \times B$ locally adjacent picture element data. Hence, the picture element data is 0 to $2^a-1$.

Assuming that the sum of $A \times B$ locally adjacent picture element data is S,

$$0 \leq S \leq (2^a-1) \times A \times B$$

Hence, assuming that the power of two greater than $(A \times B)$ and nearest to $(A \times B)$ is $2^n$, the following relationship becomes true:

$$(0/2^n) \leq (S/2^n) \leq ((2^a-1)/2^n) \times A \times B$$

Hence,

$$0 \leq (S/2^n) \leq ((2^a-1)/2^n) \times A \times B \leq ((2^a-1)/2^n) \times 2^n = 2^a - 1$$

Accordingly, the maximum number of bits in the integer part of $S/2^n$ is "a" bits, and with the fraction part ignored, $S/2^n$ can be output in "a" bits.

An error will now be examined. The fraction part ignored as described above is the cause of the error.

Now assume that the fraction part is "n" bits long and has a value of $t_j = (1 \leq j \leq (M/A) \times (N/B))$ as shown below:

$$0 \leq t_j \leq \Sigma_{i-1}^n (1/2^i)$$

Then there is the following relationship:

$$0 \leq \Sigma_{j=1}^z t_j \leq \Sigma_{j=1}^z (\Sigma_{i=1}^n (1/2^i))$$

and an overall error will be as follows:

$$= \Sigma_{i=1}^n (1/2^i) \, Z < Z$$

Hence,

$$Z = (M/A) \times (N/B)$$

and the error produced by truncating the fraction part in the first half stage is smaller than $N/A \times M/B$.

Also, by truncating the fraction part in the second half stage, a value smaller than $N/A \times M/B + 1$ is the error occurring in both the first and second half stages.

For example, when $N = 6$, $M = 6$, $A = 3$ and $B = 3$ in the present embodiment, the error is:

$$(N/A) \times (M/B) + 1 = (6/3) \times (6/3) + 1 = 5$$

Since the eight-bit picture element data can take a value between 0 and 255, the error is $5/256 = 2.0\%$. This 2.0% error is small enough on a practical level.

Although the error will be increased if $N/A \times M/B$ is made larger by the N, M, A and B selected, the error matters little on the practical level if the N, M, A and B are selected appropriately.

The units constituting the present invention will now be compared with those constituting the conventional design to examine how small is the circuit scale of the present invention.

The conventional design employs seven logic elements for adding six sets of eight-bit or 11-bit data (hereinafter referred to as the "ADD6"), each requiring five ADD2's. Hence,

$$ADD2 = 5 \times 7 = 35 \text{ comp.}$$

Since the present embodiment uses four ADD3's and three ADD2's, each ADD3 comprising two ADD2's:

$$ADD2 = 4 \times 2 + 3 = 11 \text{ comp.}$$

In addition, the logic elements 19 for shifting data right four bit positions in the present embodiment only requires wiring and does not need any special devices, and the 16/36 multiplying element 21 is similar in circuitry to the 1/36 multiplying element in the conventional design.

Accordingly, when the above is rearranged,

The present invention employs:

| ADD2 | = 11 comp. |
|---|---|
| 4-bit shifter | = 0 comp. |
| 16/36 multiplier | = 1 comp. |
| 1H | = 5 comp. |
| L | = 17 comp. |

whereas the conventional design requires:

| ADD2 | = 35 comp. |
|---|---|
| 1/36 multiplier | = 1 comp. |
| 1H | = 5 comp. |
| L | = 36 comp. |

The circuit scale of the present embodiment is thus smaller than that of the conventional design.

It will be appreciated that the six-by-six adjacent picture elements divided into three-by-three and two-by-two adjacent picture elements in the embodiment may be expanded to N × M, and for example, nine-by-nine adjacent picture elements may be divided into three-by-three and three-by-three adjacent picture elements.

Also, N × M picture elements may be subdivided into not only two stages but three or more stages, e.g., A × B, C/A × D/B, N/C × M/D. For instance, 64 × 64 may be divided into 4 × 4, 4 × 4, 4 × 4.

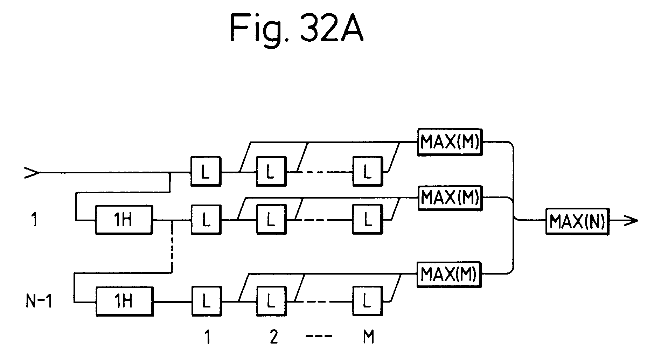

A further question is whether there is a preference for the order in which the two-stage processing occurs, i.e., in the case of a 6 by 6 array, is it better to have the first stage 3 by 3 and then have a second stage 2 by 2 or is there no preference? Referring to the example in Fig. 32A, where the conventional arrangement of latches (L) in a N by M array and delay lines (H) is shown, the number of comparators that are required can be calculated as follows:

Number of latches (L) equals M $\cdot$ N;
Number of 1 line delays (1H) equals N-1; and
Number of comparators, if the number of comparators to calculate a set of maximum values with "a" sets of input is MAX(a), where MAX(1) = 0 MAX(a) = (a-1)MAX(2)
then the number of comparators
= N $\cdot$ MAX(M) + MAX(N)
= (NM-1)MAX(2).

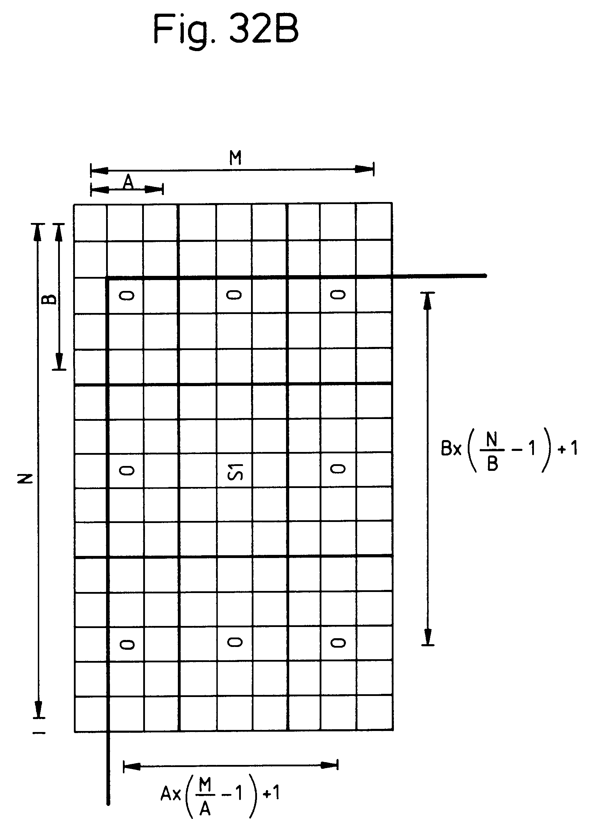

With respect to the present invention, the arrangement with reference to Fig. 32B is applicable. As in the conventional design, the image of interest comprises a first array of M × N locally adjacent picture elements wherein a picture element S1 is an approximate center on an object image. However, the N × M array is divided into a plurality of second arrays of A × B locally adjacent picture elements. In the processing of the second arrays, each picture element S2 in the array will serve as an approximate center on the object image in the source image and an arithmetic calculation will be made of a value for that element with the result used in the generation of a stored destination image. As already explained with respect to the several embodiments and as illustrated in Figs. 15 and 16, this initial processing will convert the source image into a destination image for use in further processing.

In the present invention, the processing is accomplished in at least two stages, as already taught in the several preferred embodiments. Thus, in the first stage:

M in the conventional design should be replaced by A and N should be replaced by B. Therefore, the number of latches (L) is equal to A $\cdot$ B, the number of 1 line delays is equal to (B - 1) and the number of comparators is equal to (AB-1)MAX(2)

In the second stage, from a view of Fig. 32B, it can be seen that the number of latches (L) equals

$$\left[ A \times \left( \frac{M}{A} - 1 \right) + 1 \right] \times \frac{N}{B} = \frac{N}{B} (M - A + 1) \quad ,$$

the number of 1 line delays (1H) equals

19

$$\left[B \times \left(\frac{N}{B} - 1\right) + 1\right] - 1 = N - B,$$

and the number of comparators equals

$$\left(\frac{MN}{AB} - 1\right) \times MAX(2).$$

Therefore, when the first stage and the second stage components are added up, the number of latches (L) equals

$$AB \times \frac{N}{B}(M - A + 1),$$

the number of 1 line delays (1H) equals (B-1) + (N-B) = N-1; and the number of comparators equals

$$\left[(AB-1) + (\frac{MN}{AB} - 1)\right] MAX(2).$$

When everything is put together in a table

|  | conven-tional | 1st stage | 2nd stage | Total |
|---|---|---|---|---|
| No. of Latches(L) | M • N | A • B | $\frac{N}{B}(M-A+1)$ | $AB + \frac{N}{B}(M-A+1)$ |
| No. of 1 line delays(1H) | N − 1 | B − 1 | N − B | N − 1 |
| MAX(2) | (MN − 1) | (AB − 1) | $\left(\frac{MN}{AB} - 1\right)$ | $(AB-1) + \left(\frac{MN}{AB} - 1\right)$ |

Therefore, when the first stage is 3 × 3 and the second stage is 2 × 2

$$\left(\begin{array}{c} M = N = 6 \\ A = B = 3 \end{array}\right)$$

the number of latches (L) equals $3 \times 3 + \frac{6}{3}(6-3+1) = 17$,
the number of 1 line delays (1H) equals 6-1 = 5

$$MAX(2) \quad \cdots \quad \left[(3 \cdot 3 - 1) + (\frac{6 \cdot 6}{3 \cdot 3} - 1)\right] = 11$$

By contrast, when the first stage is 2 × 2, and the second stage is 3 × 3

$$\left(\begin{array}{l} M = N = 6 \\ A = B = 2 \end{array}\right)$$

the number of latches (L) equals $2 \times 2 + \frac{6}{2}(6-2+1) = 19$,
the number of 1 line delays equals 6-1 = 5

$$\mathrm{MAX}(2) \quad \dots \quad \left[ (2 \cdot 2 - 1) + (\frac{6 \cdot 6}{2 \cdot 2} - 1) \right] = 11$$

Therefore, when 6 × 6 is divided by 3 × 3 at the first stage and then by 2 × 2 at the second stage, the number of latches is smaller by 2 than when divided by 2 × 2 at the first stage and then by 3 × 3 at the second stage. Nonetheless, the multistage approach in any case has clear advantages over the conventional art, as already explained.

A final issue concerns the minimum values of M, N, A, B, as may be determined from the arrangement illustrated in Fig. 32B.

First, a determination must be made of when the number of latches becomes a positive number on the basis of the following calculation which compares the number of latches in the conventional design with the number of latches for the invention, i.e., find in which case

$$K = MN - \left[ AB + \frac{N}{B}(M - A + 1) \right]$$

will become positive where MN is number of conventional design latches and the remainder concerns the invention.

When M = mA and N = nB, then

$$K = mnAB - [AB + n(mA - A + 1)]$$

$$= (mnB - B - mn + n)A - n$$

Therefore, since n≧1, when A = 0 then K will become a negative number.

In order for K to be a positive number, where a necessary condition is that

K = mnB - B - mn + n > 0

then

$$K = mnB - B - mn + n$$

$$= (mn-1)B - n(m-1)$$

Therefore, in order for

$$B > \frac{n(m-1)}{mn-1}$$

to be satisfied,

$m \neq 1$ , and
$n \neq 1$ should be satisfied.

Next, considering the case when $m = 1$ and $n \neq 1$, in order for

$k = (n-1)B > 0$ to be satisfied,

when both $n-1 > 0$ and $B > 0$
then

$K = (n-1)BA - n$, when $n = 2$.

The minimum A, B combinations to satisfy $K = BA-2 > 0$ are:

$$\begin{pmatrix} A = 1 \\ B = 3 \end{pmatrix} \qquad \begin{pmatrix} A = 2 \\ B = 2 \end{pmatrix} \qquad \begin{pmatrix} A = 3 \\ B = 1 \end{pmatrix}$$

When $n = 3$
Minimum A, B combinations to satisfy $K = 2BA - 3 > 0$ are:

$$\begin{pmatrix} A = 1 \\ B = 2 \end{pmatrix} \qquad \begin{pmatrix} A = 2 \\ B = 1 \end{pmatrix}$$

When $n = 4$
Minimum A, B combinations to satisfy $K = 3BA - 4 > 0$ are:

$$\begin{pmatrix} A = 1 \\ B = 2 \end{pmatrix} \qquad \begin{pmatrix} A = 2 \\ B = 1 \end{pmatrix}$$

Similarly, when $n \geq 5$, the minimum A, B combinations are the same as those when $n = 3$.
Next, when $n = 1$ and $m \neq 1$, in order for $K = (m-1)(B-1) > 0$ to be satisfied, when both $(m-1) > 0$ and $B > 1$, then

$K = (m-1)(B-1)A - 1$

When $m = 2$
Minimnum A, B combination to satisfy $K = (B-1)A - 1 > 0$ are:

$$\begin{pmatrix} A = 1 \\ B = 3 \end{pmatrix} \qquad \begin{pmatrix} A = 2 \\ B = 2 \end{pmatrix}$$

When $m = 3$, the minimum A, B combination to satisfy $K = 2(B-1)A - 1 > 0$ are:

$$\begin{pmatrix} A = 1 \\ B = 2 \end{pmatrix}$$

22

When m ≥ 4, the minimum A, B combinations are the same as those when m = 3.
Therefore, when everything is put together,

$$(a)\begin{pmatrix}A=1\\B=2\\M=1\\N=6\end{pmatrix} \quad (b)\begin{pmatrix}A=1\\B=2\\M=3\\N=2\end{pmatrix} \quad (c)\begin{pmatrix}A=1\\B=3\\M=2\\N=3\end{pmatrix} \quad (d)\begin{pmatrix}A=2\\B=1\\M=2\\N=3\end{pmatrix} \quad (e)\begin{pmatrix}A=3\\B=1\\M=3\\N=2\end{pmatrix}$$

Concerning the number of 1 line delays (1H), it is the same as that of the conventional design.
As for the number of comparators [MAX(2)]
In case of (a) above,
conventional ... 5
this invention ...

$$(1 \cdot 2 - 1) + \left(\frac{1 \cdot 6}{1 \cdot 2} - 1\right) = 1 + 2 = 3$$

In case of (b) above,
conventional ... 5
this invention ...

$$(1 \cdot 2 - 1) + \left(\frac{3 \cdot 2}{1 \cdot 2} - 1\right) = 1 + 2 = 3$$

In case of (c) above,
conventional ... 5
this invention ...

$$(1 \cdot 3 - 1) + \left(\frac{3 \cdot 2}{1 \cdot 3} - 1\right) = 2 + 1 = 3$$

In case of (d) above,
conventional ... 5
this invention ...

$$(2 \cdot 1 - 1) + \left(\frac{2 \cdot 3}{2 \cdot 1} - 1\right) = 1 + 2 = 3$$

In case of (e) above,
conventional ... 5
this invention ...

$$(3 \cdot 1 - 1) + \left(\frac{3 \cdot 2}{3 \cdot 1} - 1\right) = 2 + 1 = 3$$

Therefore, minimum values of M, N, A, B are:
M = 1 when (N = 6, A = 1, B = 2)

$$N=2 \text{ when} \quad \begin{bmatrix} (M=3\,,A=1\,,B=2\,) \\ or \\ (M=3\,,A=3\,,B=1\,) \end{bmatrix}$$

$$A=1 \text{ when} \quad \begin{bmatrix} (M=1\,,N=6\,,B=2\,) \\ or \\ (M=3\,,N=2\,,B=2\,) \\ or \\ (M=2\,,N=3\,,B=3\,) \end{bmatrix}$$

$$B=1 \text{ when} \quad \begin{bmatrix} (M=2\,,N=3\,,A=2\,) \\ or \\ (M=3\,,N=2\,,A=3\,) \end{bmatrix}$$

It will be apparent that the invention, as described above, achieves a low-cost, compact image processor which has subdivided N × M adjacent processing into A × B adjacent processing and N/A × M/B adjacent processing and reduced the circuit scale.

The entire disclosure of each and every foreign patent application from which the benefit of foreign priority has been claimed in the present application is incorporated herein by reference, as if fully set forth.

Although this invention has been described in at least one preferred embodiment with a certain degree of particularity, it is to be understood that the present disclosure of the preferred embodiment has been made only by way of example and that numerous changes in the details and arrangement of components may be made without departing from the spirit and scope of the invention as hereinafter claimed.

**Claims**

1. An image processing method for finding one of a maximum value, a minimum value and an approximate median value in a coordinate array of M × N locally adjacent picture elements defining rows and columns and having a picture element S1 as an approximate center on an object image, comprising the steps of:

    finding said one of a maximum value, a minimum value and a median in a coordinate array of A × B locally adjacent picture elements having each picture element S2 therein as at least an approximate center on said object image and defining the result as the locally adjacent value of said picture element S2 when A is a measure of M and B is a measure of N;

    symmetrically selecting M/A image pieces defined by coordinate positions including both ends in the range of M-A + 1 picture elements in a row and symmetrically selecting N/B image pieces defined by coordinate positions including both ends in the range of N-B + 1 picture elements in a column, with said picture element S1 defined as the approximate center;

    selecting (M/A) × (N/B) picture elements as picture elements S2 located at the intersections of said selected coordinate positions in said row and said column; and

    finding said one of the maximum value, minimum value and median value of locally adjacent values for said selected (M/A) × (N/B) picture elements and defining the result as said one of the maximum value, minimum value and approximate median value in the M × N locally adjacent picture elements having said picture element S1 as the approximate center.

2. An image processing method for finding an approximate median value in a coordinate array of M × N locally adjacent picture elements defining rows and columns and having a picture element S1 as an approximate center on an object image, comprising the steps of:

    finding B medians for B image pieces of A × 1 picture elements within a coordinate array of A × B locally adjacent picture elements having each picture element S2 therein as at least an approximate center on said object image and employing the median of said B found medians as the locally adjacent

24

value of said picture element S2;

symmetrically selecting M/A image pieces defined by coordinate positions comprising both ends in the range of M-A + 1 picture elements in a row and symmetrically selecting N/B image pieces defined by coordinate positions comprising both ends in the range of N-B + 1 picture elements in a column, with said picture element S1 defined as the approximate center;

selecting (M/A) × (N/B) picture elements as picture elements S2 located at the intersections of said selected coordinate positions in said row and said column; and

finding the median of locally adjacent values for said selected (M/A) × (N/B) picture elements and defining the result as said approximate median in the M × N locally adjacent picture elements having said picture element S1 as the approximate center.

3. An image processing method for finding an approximate median value in a coordinate array of M × N locally adjacent picture elements defining rows and columns and having a picture element S1 as an approximate center on an object image comprising the steps of:

finding a median value in a coordinate array of A × B locally adjacent picture elements having each picture element S2 therein as at least an approximate center on said object image and defining the result as the locally adjacent value of said picture element S2 when A is a measure of M and B is a measure of N;

symmetrically selecting M/A image pieces defined by coordinate positions comprising both ends in the range of M-A + 1 picture elements in a row and symmetrically selecting N/B image pieces defined by coordinate positions comprising both ends in the range of N-B + 1 picture elements in a column, with said picture element S1 defined as the approximate center;

selecting (M/A) × (N/B) picture elements as picture elements S2 located at the intersections of said selected coordinate positions in said row and said column; and

finding (N/B) medians for selected (M/A) × 1 picture elements S2 and defining the median of said (N/B) medians as the approximate median in the M × N locally adjacent picture elements having said picture element S1 as the approximate center.

4. An image processing method for finding an average value in a coordinate array of M × N locally adjacent picture elements defining rows and columns and having a picture element S1 as an approximate center on an object image, comprising the steps of:

finding a sum in an array of A × B locally adjacent picture elements having each picture element S2 as an approximate center on said object image when A is the measure of M, B is a measure of N, and the power of two greater than A × B and nearest to A × B is 2n;

multiplying said found sum by 1/2n and employing the result as the locally adjacent value of said picture element S2;

symmetrically selecting M/A image pieces defined by coordinate positions comprising both ends in the range of M-A + 1 picture elements in a row and symmetrically selecting N/B image pieces defined by coordinate positions comprising both ends in the range of M-B + 1 picture elements in a column, with said picture element S1 defined as the approximate center;

selecting (M/A) × (N/B) picture elements as picture elements S2 located at the intersections of said selected coordinate positions in said row and said column; and

finding the sum of the locally adjacent values in said selected (M/A) × (N/B) picture elements, multiplying said sum by 2n/(M × N), and employing the result as the average value in the M × N locally adjacent picture elements having said picture element S1 as the approximate center.

5. An image processing method for finding one of a maximum value, a minimum value and an approximate median in a coordinate array of M × N locally adjacent picture elements defining rows and columns and having a picture element S1 as an approximate center on an object image, comprising the steps of:

finding one of a maximum value, a minimum value and a median value in an array of A × B locally adjacent picture elements having each picture element S2 as an approximate center on said object image and employing the result as the locally adjacent value of said picture element S2 when A and B are odd numbers not less than three, a and b are integers between zero and two, and A is the measure of M + a and B is the measure of N + b;

symmetrically selecting (M + a)/A image pieces defined by coordinate positions comprising both ends in the range of M-(A-a) picture elements in a row and symmetrically selecting (N + b)/B image pieces defined by coordinate positions comprising both ends in the range of N-(B-b) picture elements in a column, with said picture element S1 as the approximate center;

selecting ((M+a)/A) × ((N+b)/B) picture elements as picture elements S2 located at the intersections of said selected coordinate positions in said row and said column; and

finding one of the maximum value, minimum value and median of locally adjacent values in said selected ((M+a)/A) × ((N+b)/B) picture elements and employing the result as one of the maximum value, minimum value and approximate median in the M × N locally adjacent picture elements having said picture element S1 as the approximate center.

6. An image processing method for finding one of a maximum value, a minimum value and an approximate median in a coordinate array of M × N locally adjacent picture elements defining rows and columns and having a picture element S1 as an approximate center on an object image, comprising the steps of:

finding medians for each of B image pieces comprising A × 1 picture elements among A × B locally adjacent picture elements having each picture element S2 as the approximate center on said object image and employing the median of said found B medians as the locally adjacent value of said picture element S2;

symmetrically selecting (M+a)/A image pieces defined by coordinate positions comprising both ends in the range of M-(A-a) picture elements in a row and symmetrically selecting (N+b)/B image pieces defined by coordinate positions comprising both ends in the range of N-(B-b) picture elements in a column, with said picture element S1 as the approximate center;

selecting ((M+a)/A) × ((N+b)/B) picture elements as picture elements S2 located at the intersections of said selected coordinate positions in the row and column; and

finding one of the maximum value, minimum value and median of locally adjacent values in said selected ((M+a)/A) × ((N+b)/B) picture elements and employing the result as one of the maximum value, minimum value and approximate median in the M × N locally adjacent picture elements having said picture element S1 as the approximate center.

7. An image processing method for finding one of a maximum value, a minimum value and an approximate median in a coordinate array of M × N locally adjacent picture elements defining rows and columns and having a picture element S1 as an approximate center on an object image, comprising the steps of:

finding one of a maximum value, a minimum value and a median value in an array of A × B locally adjacent picture elements having each picture element S2 as an approximate center on said object image and employing the result as the locally adjacent value of said picture element S2 when A and B are odd numbers not less than three, a and b are integers between zero and two, and A is the measure of M+a and B is the measure of N+b;

symmetrically selecting (M+a)/A image pieces defined by coordinate positions comprising both ends in the range of M-(A-a) picture elements in a row and symmetrically selecting (N+b)/B image pieces defined by coordinate positions comprising both ends in the range of N-(B-b) picture elements in a column, with said picture element S1 as the approximate center;

selecting ((M+a)/A) × ((N+b)/B) picture elements as picture elements S2 located at the intersections of said selected coordinate positions in said row and said column; and

finding ((N+b)/B) medians for corresponding image pieces in said selected ((M+a)/A) × 1 picture elements S2 and employing the median of said ((N+b)/B) medians as the approximate median in the M × N locally adjacent picture elements having said picture element S1 as the approximate center.

8. An image processing apparatus for finding one of a maximum value, minimum value and an approximate median in a coordinate array of M × N locally adjacent picture elements having a picture element S1 as an approximate center on an object image, comprising:

first locally adjacent processing means for finding one of a maximum value, a minimum value and a median in an array of A × B locally adjacent picture elements having each picture element S2 as an approximate center on said object image and employing the result as the locally adjacent value of said picture element S2 when A is the measure of M and B is the measure of N; and

second locally adjacent processing means for symmetrically selecting M/A image pieces defined by coordinate positions comprising both ends in the range of M-A+1 picture elements in a row and symmetrically selecting N/B image pieces defined by coordinate positions comprising both ends in the range of N-B+1 picture elements in a column, with said picture element S1 as the approximate center, finding one of the maximum value, minimum value and median of locally adjacent values obtained by said first locally adjacent processing means for (M/A) × (N/B) picture elements S2 located at the intersections of said selected coordinate positions, and employing the result as one of the maximum value, minimum value and approximate median in the M × N locally adjacent picture elements having said picture element S1 as the approximate center.

9. An image processing apparatus as defined in claim 8, wherein said first locally adjacent processing means comprises:

a first delay device series comprising (B-1) serially-connected delay devices, each device having first and second ends and being operative to delay the serially input picture element data of said object image on a row basis;

B sets of latch devices, each set being connected to at least one of said first and second ends, each of said sets comprising one of (A) and (A-1) latch devices connected in series for latching said picture element data in the same row in sequence;

B first maximum value outputting means for receiving the outputs of said (A) latch devices connected in series in said B sets of latch device groups or the outputs of said (A-1) latch devices and the branch of an input to said latch device on said first delay device series side in parallel and outputting the maximum value of said A inputs; and

second maximum value outputting means for receiving the outputs of said B first maximum value outputting means in parallel and outputting the maximum value of said B inputs as the maximum value in the A × B locally adjacent picture elements of said picture element S2.

10. An image processing apparatus as defined in claim 8, wherein said second locally adjacent processing means comprises:

a first delay device series comprising (N-B) serially-connected delay devices, each device having first and second ends and being operative to delay the serially input picture element data of said object image on a row basis;

N/B sets of latch devices, each set being connected to at least one of said first and second ends of said first delay device series or symmetrically connected to the connection points of said delay devices including said both ends, and each of said sets comprising (M-A + 1) or (M-A) latch devices connected in series for latching said picture element data in the same row in sequence;

a first maximum value outputting means for receiving M/A pieces of outputs from at least one of said first and second ends in parallel from among the outputs of said (M-A + 1) latch devices connected in series or from among the outputs of said (M-A) latch devices and the branch of an input to the latch device on said first delay device series side, and outputting the maximum value of said M/A inputs; and

a second maximum value outputting means for receiving the outputs of said N/B first maximum value outputting means corresponding to said N/B sets of latch devices in parallel and outputting the maximum value of said N/B inputs.

11. An image processing apparatus as defined in claim 8, wherein said first locally adjacent processing means comprises:

a first delay device series comprising (B-1) serially-connected delay devices, each device having first and second ends and being operative to delay the serially input picture element data of said object image on a row basis;

B sets of latch devices connected to at least one of said first end, said second end and the connection points of said first delay devices, each of said sets comprising one of A or (A-1) latch devices connected in series for latching said picture element data in the same row in sequence;

B first minimum value outputting means for receiving the outputs of said A latch devices connected in series in said B sets of latch device groups or the outputs of said (A-1) latch devices and the branch of an input to the latch device on said first delay device series side in parallel, and outputting the minimum value of said A inputs; and

second minimum value outputting means for receiving the outputs of said B first minimum value outputting means in parallel and outputting the minimum value of said B inputs as the minimum value in the A × B locally adjacent picture elements of said picture element S2.

12. An image processing apparatus as defined in claim 8, wherein said second locally adjacent processing means comprises:

a first delay device series consisting of (N-B) delay devices connected in series for delaying the serially input picture element data of said object image on a row basis;

N/B sets of latch devices, each set being connected to at least one end of said first delay devices or symmetrically connected to the connection points of said delay devices comprising said first and second ends, each of said sets comprising one of (M-A + 1) or (M-A) latch devices connected in series for latching said picture element data in the same row in sequence;

first minimum value outputting means for receiving M/A outputs from said first and second ends or symmetrical positions including said first and second ends in parallel from among the outputs of said (M-A + 1) latch devices connected in series or from among the outputs of said (M-A) latch devices and the branch of an input to the latch device on said first delay device series side, and outputting the minimum value of said M/A pieces of inputs; and

second minimum value outputting means for receiving the outputs of said N/B first minimum value outputting means corresponding to said N/B sets of latch device groups in parallel and outputting the minimum value of said N/B inputs.

**13.** An image processing apparatus as defined in claim 8, wherein said first locally adjacent processing means comprises:

first delay device series comprising (B-1) delay devices connected in series for delaying the serially input picture element data of said object image on a row basis;

B sets of latch device groups connected to both ends and the connection points of said first delay device series, each of said sets comprising A or (A-1) latch devices connected in series for latching said picture element data in the same row in sequence;

first minimum value deleting means comprising (A × B - 1)/2 stages for receiving the outputs of said A latch devices connected in series in said B sets of latch device groups or the outputs of said (A-1) latch devices and the branch of an input to the latch device on said first delay device series side in parallel, deleting minimum values from among said (A × B) pieces of input picture element data in sequence, and outputting remaining picture element data; and

first minimum value outputting means for receiving (A × B + 1)/2 pieces of picture element data output by said first minimum value deleting means and outputting the minimum value of these inputs as the median in the A × B locally adjacent picture elements of said picture element S2.

**14.** An image processing apparatus as defined in claim 8, wherein said second locally adjacent processing means comprises:

first delay device series comprising (N-B) delay devices connected in series for delaying the serially input picture element data of said object image on a row basis;

N/B sets of latch device groups connected to both ends of said first delay device series or symmetrically connected to the connection points of said delay devices including said both ends, each of said sets consisting of (M-A + 1) or (M-A) latch devices connected in series for latching said picture element data in the same row in sequence;

minimum value deleting means comprising ((M/A) × (N/B) - 1)/2 stages for receiving M/A pieces of outputs from both ends or symmetrical positions including said both ends in parallel from among the outputs of said (M-A + 1) pieces of latch devices connected in series in said N/B sets of latch device groups or from among the outputs of said (M-A) pieces of latch devices and the branch of an input to the latch device on said first delay device series side, deleting minimum values from among said (M/A × N/B) pieces of inputs in sequence, and outputting remaining picture element data; and

minimum value outputting means for receiving the ((M/A × (N/B) + 1)/2 pieces of picture element data output by said minimum value deleting means and outputting the minimum value of these inputs as the approximate median in the M × N locally adjacent picture elements of said picture element S1.

**15.** The method of claim 1, wherein the minimum values of M, N, A and B are:

M = 1 when N = 6, A = 1 and B = 2;
N = 2 when M = 3, A = 1 and B = 2,
or when M = 3, A = 3 and B = 1;
A = 1 when M = 1, N = 6 and B = 2,
or when M = 3, N = 2 and B = 2,
or when M = 2, N = 3 and B = 3;
B = 1 when M = 2, N = 3 and A = 2,
or when M = 3, N = 2 and A = 2.

16. The method of determining an arithmetic value of an array of NxM adjacent picture elements arranged in first and second orthogonal directions in a source image comprising:

calculating the maximum values of AxB adjacent picture element data in said source image, when A is a measure of M and B is a measure of N;

delaying the resultant arithmetic values by A picture elements in the first orthogonal direction and B picture elements in the second orthogonal direction;

fetching M/A and N/B adjacent picture element data;

finding an arithmetic value of said fetched data; and

generating a destination image.

17. The method of determining an arithmetic value in a source image wherein said arithmetic value is at least one of a minimum and a maximum value.

18. The method of determining a median value of an array of NxM adjacent picture elements arranged in first and second orthogonal directions in a source image comprising:

dividing said adjacent NxM picture elements into N/A and M/B pieces of image, each piece comprising an array of AxB adjacent picture elements;

finding a first set of medians, one within each of said arrays of AxB adjacent picture elements; and

finding a second median from among the resultant N/A times M/B pieces of medians in said first set.

19. The method of claim 18, wherein said second median is an approximate median of said source image and is used for suppressing different values in said source image to eliminate noise.

20. The method of determining a median value of an array of NxM adjacent picture elements arranged in first and second orthogonal directions in a source image comprising:

dividing said adjacent NxM picture elements into N/A and M/B pieces of image, each piece comprising an array of AxB adjacent picture elements;

dividing said adjacent AxB picture elements into B sets of data on a line basis comprising A elements and finding a first set of medians, one for each line, simultaneously;

finding a second median, one for each of said array of AxB elements from said first set of corresponding medians for said arrays of AxB adjacent picture elements; and

finding a third median from among the resultant second medians.

21. The method of claim 20, wherein said third median is an approximate median of said source image and is used for suppressing different values in said source image to eliminate noise.

22. The method of claim 20, wherein said third median finding step comprises dividing the adjacent second medians into sets on a line basis and finding a fourth median for each line, then further finding an approximate median from said fourth medians.

23. The method of claim 16, wherein said N × M picture elements are subdivided into a plurality of stages, comprising three or more stages.

# Fig.1

INPUT IMAGE DATA

8×3 SETS

8

MAX3

8

MAX3

8

MAX3

8×3 SETS

8

MAX3

8×3 SETS

8

MAX3

8×3 SETS

8

4

4

1H

1H

1

2

MAXIMUM VALUE IMAGE DATA
OF 3×3 PICTURE ELEMENTS

8

8×2 SETS

MAX2

8

8×2 SETS

MAX2

8

8×2 SETS

MAX2

8

1H

1H

1H

3

3

1

2

EP 0 535 639 A2

# Fig. 2

8-BIT DATA → A
8-BIT DATA → B   MAX2   MAX(A,B)
8-BIT DATA → B   MAX2

A
MAX(A,B) → MAXIMUM VALUE OF 3 SETS OF 8-BIT DATA

MAX3

3

4

3

EP 0 535 639 A2

# Fig. 3

INPUT IMAGE DATA

MINIMUM VALUE IMAGE DATA OF 3×3 PICTURE ELEMENTS

8×3 SETS MIN3 8

8×3 SETS MIN3 8

8×3 SETS MIN3 8

8×3 SETS MIN3 8

8×2 SETS MIN2 8

8×2 SETS MIN2 8

8×2 SETS MIN2 8

EP 0 535 639 A2

32

# Fig. 4

EP 0 535 639 A2

```
                              MIN3                    6

      8-BIT DATA ──────→ A          5

                        │  MIN(A,B) ─────→ A
      8-BIT DATA ──────→ B  MIN2              MIN(A,B) ──────→ MINIMUM VALUE OF
                                            │                  3 SETS OF 8-BIT DATA
      8-BIT DATA ────────────────────────→ B  MIN2
                                               5
```

# Fig. 5

INPUT IMAGE DATA

8x3 SETS    8x3 SETS    8x3 SETS    8x3 SETS    8x3 SETS

MINIMUM VALUE (MEDIAN OF 3x3 DATA)

8x3 SETS    8x3 SETS    8x3 SETS    8x3 SETS    8x2 SETS

8x3 SETS    8x2 SETS    8x1 SET

MIN5

1TH STAGE    2ND STAGE    3RD STAGE    4TH STAGE    5TH STAGE

7    8    9    10    11

MEDIAN IMAGE DATA OF 3x3 PICTURE ELEMENTS

8x2 SETS    8x2 SETS

MINIMUM VALUE (MEDIAN OF 2x2 DATA)

8x2 SETS    8x1 SET

MIN3

6TH STAGE    7TH STAGE

12    6

1    2

EP 0 535 639 A2

# Fig. 6

1TH STAGE                                              7

8×3 SETS ──→ │MIN MAX3│ MINIMUM VALUE 1

8×3 SETS ──→ │MIN MAX3│ MINIMUM VALUE 1

8×3 SETS ──→ │MIN MAX3│ MINIMUM VALUE 1

8×2 SETS    8×3 SETS ──→

8×2 SETS    8×3 SETS ──→

8×2 SETS    8×2 SETS ──→

│NOT MIN3│ 8×2 SETS

13

14

# Fig. 7

MINMAX3                          13

15

8-BIT DATA ──→ A    MAX(A,B) ─────────────────→ ⎱ DATA OTHER
8-BIT DATA ──→ B    MIN(A,B) ──→ A   MAX(A,B) ──→ ⎰ THAN MINI-
                                                  MUM VALUE
8-BIT DATA ─────────────────→ B   MIN(A,B) ──→ MINIMUM VALUE

15

# Fig. 8

NOTMIN3                          14

15

8-BIT DATA ──→ A    MAX(A,B) ─────────────────→ ⎱ DATA OTHER
                              MAX2                 THAN MINI-
8-BIT DATA ──→ B    MIN(A,B) ──→ A   MAX(A,B) ──→ ⎰ MUM VALUE

8-BIT DATA ─────────────────→ B

3

# Fig. 9

# Fig.10

EP 0 535 639 A2

# Fig. 11

EP 0 535 639 A2

## Fig. 12

INPUT IMAGE DATA

8x3 SETS · 8x3 SETS · 8x3 SETS · 8x3 SETS · 8x3 SETS

MINIMUM VALUE (MEDIAN OF 3×3 DATA)

8x3 SETS · 8x3 SETS · 8x3 SETS · 8x3 SETS · 8x2 SETS

8x3 SETS · 8x2 SETS · 8x1 SET

1TH STAGE   2ND STAGE   3RD STAGE   4TH STAGE   5TH STAGE

7        8        9        10        11

MEDIAN IMAGE DATA OF 3×3 PICTURE ELEMENTS

8x2 SETS   MED2   MEDIAN

8x2 SETS   MED2   MEDIAN

MED2 → APPROXIMATE MEDIAN

17

1   2

EP 0 535 639 A2

Fig.13

EP 0 535 639 A2

# Fig.14

EP 0 535 639 A2

# Fig. 15

MAXIMUM VALUE OF 3x3 PICTURE ELEMENTS

SOURCE IMAGE

MAXIMUM VALUE IMAGE OF 3x3 PICTURE ELEMENTS

AS TO ALL PICTURE ELEMENTS OF THE ABOVE 14x14 SOURCE IMAGE, 6x6 ADJACENT PICTURE ELEMENTS ARE DIVIDED INTO 2x2 SETS OF 3x3 ADJACENT PICTURE ELEMENTS AS SHOWN ABOVE AND A MAXIMUM VALUE IS FIRST FOUND FROM AMONG 3x3 PCS. ($g_1$, $g_2$, $g_i$, $g_{i+1}$ IN RIGHT-HAND DIAGRAM)

EP 0 535 639 A2

# Fig. 16

MAXIMUM VALUE OF 2 x 2
ADJACENT PICTURE ELEMENTS
$(g_1, g_2, g_i, g_{i+1})$

g1  g2

$g_i$  $g_{i+1}$

f

MAXIMUM VALUE IMAGE OF 3x3
PICTURE ELEMENTS

DESTINATION IMAGE

AFTER THE MAXIMUM VALUE IMAGE OF 3x3 PICTURE ELEMENTS IS FOUND, A MAXIMUM VALUE IN 2x2 ADJACENT PICTURE ELEMENTS IS THEN FOUND WITH RESPECT TO PICTURE ELEMENTS ADJACENT BY 3 PICTURE ELEMENTS IN HORIZONTAL AND VERTICAL DIRECTIONS ($g_1$, $g_2$, $g_i$, $g_{i+1}$ IN ABOVE DIAGRAM).

EP 0 535 639 A2

# Fig. 17A

# Fig. 17B

INPUT
IMAGE
DATA

8  L

1H  8  L

1H  8  L

1H  8  L

1H  8  L

1H  8  L

1

2

8×6 SETS  MAX6  8

8×6 SETS  MAX6  8

8×6 SETS  MAX6  8

8×6 SETS  MAX6  8

8×6 SETS  MAX6  8

8×6 SETS  MAX6  8

22

8×6 SETS  MAX6

22

8  6×6 ADJACEMENT
MAXIMUM VALUE

EP 0 535 639 A2

# Fig. 18

22

MAX6

8-BIT DATA — → A
8-BIT DATA — → B          MAX(A,B)
                          MAX2

8-BIT DATA — → A
8-BIT DATA — → B          MAX(A,B)
                          MAX2

8-BIT DATA — → A
8-BIT DATA — → B          MAX(A,B)
                          MAX2

A          MAX(A,B)
B          MAX2

A          MAX(A,B)
B          MAX2

→ MAXIMUM VALUE
   OF 6 SETS OF
   8-BIT DATA

3

3

3

EP 0 535 639 A2

# Fig. 19

EP 0 535 639 A2

# Fig. 20

EP 0 535 639 A2

MIN6 — 23

8-BIT DATA → A
8- BIT DATA → B    MIN2    MIN(A,B)

8- BIT DATA → A
8- BIT DATA → B    MIN2    MIN(A,B)

8- BIT DATA → A
8- BIT DATA → B    MIN2    MIN(A,B)

A
B    MIN2    MIN(A,B)

A
B    MIN2    MIN(A,B)

→ MINIMUM VALUE OF 6 SETS OF 8- BIT DATA

5

# Fig. 21

EP 0 535 639 A2

Fig. 22

18TH STAGE

26

Fig. 23

8×6 SETS ——— MIN6  MINIMUM VALUE

8×6 SETS ——— MIN6  MINIMUM VALUE

8×6 SETS ——— MIN6  MINIMUM VALUE

23

8×1 SET ———

8×4 SETS  MIN4  MINIMUM VALUE

30

Fig.24

30

MIN4

8-BIT DATA ——→ A  5
8-BIT DATA ——→ B  MIN2  MIN(A,B)

5

A
B  MIN2  MIN(A,B) ——→ MINIMUM VALUE OF 4 SETS OF 8-BIT DATA

5
8-BIT DATA ——→ A
8-BIT DATA ——→ B  MIN2  MIN(A,B)

# Fig. 25

EP 0 535 639 A2

Fig. 26

NOTMIN6 — 28

DATA OTHER THAN MINIMUM VALUE

DATA OTHER THAN MINIMUM VALUE

8-BIT DATA
8-BIT DATA
8-BIT DATA
8-BIT DATA
8-BIT DATA
8-BIT DATA

15 — A MAX(A,B) / B MIN(A,B)
15 — A MAX(A,B) / B MIN(A,B)
15 — A MAX(A,B) / B MIN(A,B)
15 — A MAX(A,B) / B MIN(A,B)
A MAX(A,B) / B — 3

# Fig. 27

MINMAX5 — 29

8-BIT DATA → A / MAX(A,B) 15
8-BIT DATA → B / MIN(A,B)

A / MAX(A,B)
B / MIN(A,B) 15

A / MAX(A,B)
B / MIN(A,B) 15

8-BIT DATA → A / MAX(A,B) 15
8-BIT DATA → B / MIN(A,B)

8-BIT DATA

DATA OTHER THAN MINIMUM VALUE

MINIMUM VALUE OF 5 SETS OF 8-BIT DATA

DATA OTHER THAN MINIMUM VALUE

EP 0 535 639 A2

Fig. 28

# Fig. 29

EP 0 535 639 A2

ADD6

31

8(11)-BIT DATA → A
8(11)-BIT DATA → B  ADD2  ADD(A,B)  9 (12)

8(11)-BIT DATA → A
8(11)-BIT DATA → B  ADD2  ADD(A,B)  9 (12)

8(11)-BIT DATA → A
8(11)-BIT DATA → B  ADD2  ADD(A,B)  9 (12)

A
B  ADD2  ADD(A,B)  10 (13)

20

A
B  ADD2  ADD(A,B)  11 (14)  → SUM OF 6 SETS OF 8(11)-BIT DATA

20

20

# Fig. 30

MAXIMUM VALUE OF 6x6
PICTURE ELEMENTS

SOURCE IMAGE

DESTINATION IMAGE

EP 0 535 639 A2

AS TO ALL PICTURE ELEMENTS OF THE ABOVE 14x14 SOURCE IMAGE, THE MAXIMUM
VALUE OF ITS ADJACEMENT 6x6 PICTURE ELEMENTS IS FOUND AND DESTINATION
IMAGE IS GENERATED.

# Fig. 31

| STA-GE NO. | MIN MAX 6 | MIN MAX 5 | MIN MAX 4 | MIN MAX 3 | MIN MAX 2 | MIN MAX 1 | NOT MIN 6 | NOT MIN 5 | NOT MIN 4 | MIN 2 | MAX 2 |
|---|---|---|---|---|---|---|---|---|---|---|---|
| 1 | 6 | | | | | | 1 | | | 34 | 35 |
| 2 | 5 | 1 | | | | | 1 | | | 33 | 34 |
| 3 | 5 | | 1 | | | | 1 | | | 32 | 33 |
| 4 | 5 | | | 1 | | | 1 | | | 31 | 32 |
| 5 | 5 | | | | 1 | | 1 | | | 30 | 31 |
| 6 | 5 | | | | | 1 | 1 | | | 29 | 30 |
| 7 | 5 | | | | | | | 1 | | 28 | 29 |
| 8 | 4 | 1 | | | | | | 1 | | 27 | 28 |
| 9 | 4 | | 1 | | | | | 1 | | 26 | 27 |
| 10 | 4 | | | 1 | | | | 1 | | 25 | 26 |
| 11 | 4 | | | | 1 | | | 1 | | 24 | 25 |
| 12 | 4 | | | | | 1 | | 1 | | 23 | 24 |
| 13 | 4 | | | | | | | | 1 | 22 | 23 |
| 14 | 3 | 1 | | | | | | | 1 | 21 | 22 |
| 15 | 3 | | 1 | | | | | | 1 | 20 | 21 |
| 16 | 3 | | | 1 | | | | | 1 | 19 | 20 |
| 17 | 3 | | | | 1 | | | | 1 | 18 | 19 |
| TOTAL | | | | | | | | | | 442 | 459 |

$18^{TH}$ STAGE = $\begin{cases} \text{MIN2 ...18 PCS.} \\ \text{MAX2... 0 PCS.} \end{cases}$

HENCE, THE FOLLOWING NUMBERS OF UNITS ARE REQUIRED TO FIND A 6×6 MEDIAN:

MIN2 ... 460 PCS.

MAX2 ... 459 PCS.

# Fig. 32A

# Fig. 32B

$$Bx\left(\frac{N}{B}-1\right)+1$$

$$Ax\left(\frac{M}{A}-1\right)+1$$